# EUROPEAN PATENT APPLICATION

(11) **EP 4 836 570 A1**
(43) Date of publication of application: **04.11.2026**
(21) Application number: 25747491.6
(22) Date of filing: 10.01.2025
(51) Int. Cl.: H04W 72/23

(54) **COMMUNICATION METHOD AND APPARATUS**

(30) Priority: 31.01.2024 CN 202410153004
(71) Applicant: Huawei Technologies Co., Ltd., Shenzhen, Guangdong 518129 (CN)
(72) Inventor: FAN, Bo, Shenzhen, Guangdong 518129 (CN)
(74) Representative: Huawei European IPR
(86) International application number: PCT/CN2025/071872
(87) International publication number: WO 2025/161915

(57) **Abstract**

A communication method and apparatus are provided. The method includes: receiving configuration information, where the configuration information includes a physical downlink control channel PDCCH resource, the PDCCH resource is associated with a first signal, and the first signal is an M sequence or a Gold sequence; and determining, based on whether the first signal associated with the PDCCH resource is received, whether to receive a PDCCH corresponding to the PDCCH resource. In the technical solution provided in this application, a terminal device can receive the PDCCH as required, to prevent the terminal device from traversing all time-frequency resource positions at which the PDCCH may exist to receive the PDCCH, thereby reducing complexity of receiving the PDCCH by the terminal device.

## Description

This application claims priority to Chinese Patent Application No. 202410153004.7, filed with the China National Intellectual Property Administration on January 31, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A network device may configure a plurality of time-frequency resource positions for a terminal device, to send a physical downlink control channel (physical downlink control channel, PDCCH) to the terminal device. When the network device actually sends the PDCCH, the network device may send the PDCCH only at a part of the time-frequency resource positions.

The terminal device receives the PDCCH through PDCCH blind detection. The PDCCH blind detection means that, when the terminal device does not determine a specific time-frequency resource position of the PDCCH sent by the network device to the terminal device, the terminal device attempts to receive the PDCCH by traversing all time-frequency resource positions at which the PDCCH may exist. For example, the terminal device performs processing such as descrambling, rate de-matching, decoding, and cyclic redundancy check (cyclic redundancy check, CRC) check on a signal transmitted at each time-frequency resource position at which the PDCCH may exist. If the decoding succeeds, it indicates that the PDCCH of the terminal device actually exists at the time-frequency resource position. If the decoding fails, it indicates that the PDCCH of the terminal device does not exist at the time-frequency resource position.

However, the manner in which the terminal device receives the PDCCH by traversing all the time-frequency resource positions at which the PDCCH may exist has high complexity.

### SUMMARY

This application provides a communication method and apparatus, to reduce complexity of receiving a PDCCH, so that a terminal device receives the PDCCH as required.

According to a first aspect, this application provides a communication method. The method may be applied to a terminal side, for example, a terminal device, a communication module in the terminal device, a circuit or a chip (for example, a modem (Modem) chip, also referred to as a baseband (baseband) chip) responsible for a communication function in the terminal device, or a system-on-a-chip (system-on-a-chip, SoC) chip or a system in package (system in package, SiP) chip including a Modem core. An example in which the method is applied to the terminal device is used. The method includes:
receiving configuration information, where the configuration information includes a physical downlink control channel PDCCH resource, the PDCCH resource is associated with a first signal, and the first signal is an M sequence or a Gold sequence; and
determining, based on whether the first signal associated with the PDCCH resource is received, whether to receive a PDCCH corresponding to the PDCCH resource.

In the foregoing method, the first signal is introduced, and the first signal is associated with the PDCCH resource. The terminal device may determine, based on whether the first signal associated with the PDCCH resource is received, whether to receive the PDCCH corresponding to the PDCCH resource. In this way, the terminal device can receive the PDCCH as required, to prevent the terminal device from traversing all time-frequency resource positions at which the PDCCH may exist to receive the PDCCH, thereby reducing complexity of receiving the PDCCH by the terminal device.

The M sequence has a good autocorrelation. A correlation between two same M sequences is higher, but a correlation between two different M sequences is lower. The Gold sequence also has a good autocorrelation. A correlation between two same Gold sequences is higher, but a correlation between two different Gold sequences is lower. The M sequence or the Gold sequence is used as the first signal, so that the terminal device can accurately determine whether a network device sends the first signal corresponding to the terminal device, that is, determine whether a signal received by the terminal device on a time-frequency resource corresponding to the first signal is the first signal corresponding to the terminal device.

In a possible implementation, the determining, based on whether the first signal associated with the PDCCH resource is received, whether to receive the PDCCH corresponding to the PDCCH resource includes:
if the first signal associated with the PDCCH resource is received, determining to receive the PDCCH corresponding to the PDCCH resource; or
if the first signal associated with the PDCCH resource is not received, determining not to receive the PDCCH corresponding to the PDCCH resource.

In the foregoing implementation, the terminal device receives the PDCCH corresponding to the PDCCH resource only when the terminal device receives the first signal associated with the PDCCH resource, and does not receive the PDCCH corresponding to the PDCCH resource when the terminal device does not receive the first signal associated with the PDCCH resource. In this way, the terminal device can receive the PDCCH as required, to prevent the terminal device from traversing all the time-frequency resource positions at which the PDCCH may exist to receive the PDCCH, thereby reducing the complexity of receiving the PDCCH by the terminal device.

In a possible implementation, that the first signal associated with the PDCCH resource is received includes: A correlation between the first signal and a signal received on a time-frequency resource corresponding to the first signal is greater than or equal to a threshold.

That the first signal associated with the PDCCH resource is not received includes: The correlation between the first signal and the signal received on the time-frequency resource corresponding to the first signal is less than the threshold.

In the foregoing implementation, whether the received signal matches the first signal corresponding to the terminal device is detected based on the correlation between the first signal and the signal received on the time-frequency resource corresponding to the first signal and a value relationship between the correlation and the threshold. In this way, whether the first signal associated with the PDCCH resource is received can be quickly and accurately determined.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of the terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:

The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In the foregoing implementation, the cyclic shift value corresponding to the M sequence is determined based on the terminal device index. In this way, different terminal devices in a same cell can use different cyclic shift values as much as possible, to help ensure that different terminal devices in the same cell correspond to different M sequences, and reduce a misjudgment probability.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:
The cyclic shift value corresponding to the M sequence is determined based on a remainder obtained by the index of the terminal device modulo a second quantity, where the second quantity is a quantity of candidate cyclic shift values included in the first cyclic shift value group.

In the foregoing implementation, cells are grouped, candidate cyclic shift values are also grouped, a cyclic shift value group corresponds to a cell group, a specific cyclic shift value group used by a terminal device is determined based on a cell index, and a specific cyclic shift value used by the terminal device in the cyclic shift value group is determined based on a terminal device index. In this way, terminal devices in different cell groups can use different cyclic shift values, to help ensure that the terminal devices in different cell groups correspond to different M sequences, and reduce the misjudgment probability.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of the terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In the foregoing implementation, terminal devices are grouped, a cyclic shift value m1 corresponding to a first M sequence is determined based on a terminal device group to which a terminal device belongs, and a cyclic shift value m2 corresponding to a second M sequence is determined based on a terminal device index. In this way, terminal devices in different terminal device groups can use different cyclic shift values m1, and different terminal devices in a same terminal device group can use different cyclic shift values m2, to help ensure that different terminal devices correspond to different Gold sequences, and reduce the misjudgment probability.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

In the foregoing implementation, cells are grouped, a cyclic shift value m1 corresponding to a first M sequence is determined based on a cell index, and a cyclic shift value m2 corresponding to a second M sequence is determined based on a terminal device index. In this way, terminal devices in different cell groups can use different cyclic shift values m1, and different terminal devices in a same cell group can use different cyclic shift values m2, to help ensure that different terminal devices in different cell groups correspond to different Gold sequences, and reduce the misjudgment probability.

According to a second aspect, this application provides a communication method. The method may be applied to a network side, for example, a network device, a component (for example, a processor, a chip, or a chip system) in the network device, or a logical module or software that can implement all or some functions of the network device. An example in which the method is applied to the network device is used. The method includes:
sending configuration information, where the configuration information includes a physical downlink control channel PDCCH resource, the PDCCH resource is associated with a first signal, and the first signal is an M sequence or a Gold sequence; and
sending a PDCCH corresponding to the PDCCH resource and the first signal associated with the PDCCH resource.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of a terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:

The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:

The cyclic shift value corresponding to the M sequence is determined based on a remainder obtained by the index of the terminal device modulo a second quantity, where the second quantity is a quantity of candidate cyclic shift values included in the first cyclic shift value group.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of a terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

According to a third aspect, this application provides a communication apparatus. The apparatus includes a module, a unit, or a means (means) configured to perform the method according to any one of the first aspect or the possible implementations of the first aspect. Specifically, the module, the unit, or the means (means) may be implemented by software, or may be implemented by hardware, or may be implemented by software in combination with hardware.

In a possible implementation, the apparatus includes:
a transceiver unit, configured to receive configuration information, where the configuration information includes a physical downlink control channel PDCCH resource, the PDCCH resource is associated with a first signal, and the first signal is an M sequence or a Gold sequence; and
a processing unit, configured to determine, based on whether the first signal associated with the PDCCH resource is received, whether to receive a PDCCH corresponding to the PDCCH resource.

In a possible implementation, when determining, based on whether the first signal associated with the PDCCH resource is received, whether to receive the PDCCH corresponding to the PDCCH resource, the determining unit is specifically configured to:
if the first signal associated with the PDCCH resource is received, determine to receive the PDCCH corresponding to the PDCCH resource; or
if the first signal associated with the PDCCH resource is not received, determine not to receive the PDCCH corresponding to the PDCCH resource.

In a possible implementation, that the first signal associated with the PDCCH resource is received includes: A correlation between the first signal associated with the PDCCH resource and a first signal corresponding to a terminal device is greater than or equal to a threshold.

That the first signal associated with the PDCCH resource is not received includes: The correlation between the first signal associated with the PDCCH resource and the first signal corresponding to the terminal device is less than the threshold.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of the terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:
The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:

The cyclic shift value corresponding to the M sequence is determined based on a remainder obtained by the index of the terminal device modulo a second quantity, where the second quantity is a quantity of candidate cyclic shift values included in the first cyclic shift value group.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of the terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

According to a fourth aspect, this application provides a communication apparatus. The apparatus includes a module, a unit, or a means (means) configured to perform the method according to any one of the second aspect or the possible implementations of the second aspect. Specifically, the module, the unit, or the means (means) may be implemented by software, or may be implemented by hardware, or may be implemented by software in combination with hardware.

In a possible implementation, the apparatus includes:
a transceiver unit, configured to send configuration information, where the configuration information includes a physical downlink control channel PDCCH resource, the PDCCH resource is associated with a first signal, and the first signal is an M sequence or a Gold sequence.

The transceiver unit is further configured to send a PDCCH corresponding to the PDCCH resource and the first signal associated with the PDCCH resource.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of a terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:
The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:
The cyclic shift value corresponding to the M sequence is determined based on a remainder obtained by the index of the terminal device modulo a second quantity, where the second quantity is a quantity of candidate cyclic shift values included in the first cyclic shift value group.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of a terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

According to a fifth aspect, this application provides a communication apparatus. The communication apparatus includes a processor, the processor is configured to execute a computer program or instructions, and when the processor executes the computer program or the instructions, the method according to any one of the first aspect or the possible implementations of the first aspect is implemented. Optionally, the communication apparatus further includes a memory. The processor is coupled to the memory, and is configured to execute the computer program or the instructions in the memory. Optionally, the communication apparatus further includes a communication interface, and the processor is coupled to the communication interface.

The communication apparatus may be a terminal device, a communication module in the terminal device, a circuit or a chip (for example, a Modem chip, also referred to as a baseband chip) responsible for a communication function in the terminal device, or a SoC chip or a SiP chip including a Modem core.

According to a sixth aspect, this application provides a communication apparatus. The communication apparatus includes a processor, the processor is configured to execute a computer program or instructions, and when the processor executes the computer program or the instructions, the method according to any one of the second aspect or the possible implementations of the second aspect is implemented. Optionally, the communication apparatus further includes a memory. The processor is coupled to the memory, and is configured to execute the computer program or the instructions in the memory. Optionally, the communication apparatus further includes a communication interface, and the processor is coupled to the communication interface.

The communication apparatus may be a network device, a component (for example, a processor, a chip, or a chip system) in the network device, or a logical module or software that can implement all or some functions of the network device.

According to a seventh aspect, this application provides a computer-readable storage medium. The computer-readable storage medium stores a computer program or instructions, and when the computer program or the instructions are executed, the method according to any one of the first aspect, the second aspect, or the possible implementations of the first aspect and the second aspect is implemented.

According to an eighth aspect, this application provides a computer program product. The computer program product includes a computer program or instructions, and when the computer program or the instructions are executed, the method according to any one of the first aspect, the second aspect, or the possible implementations of the first aspect and the second aspect is implemented.

According to a ninth aspect, a communication system is provided, and including a terminal device and a network device. The terminal device is configured to perform the method according to any one of the first aspect or the possible implementations of the first aspect, and the network device is configured to perform the method according to any one of the second aspect or the possible implementations of the second aspect.

For beneficial effects brought by the second aspect to the ninth aspect, refer to descriptions of the beneficial effects in the first aspect. Details are not described herein again.

In addition, in a process of performing the method according to any one of the first aspect to the ninth aspect or the possible implementations of the first aspect to the ninth aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the receiving module) receives the information, and inputs the information into the processor. Further, after the transceiver receives the information, other processing may need to be performed on the information before the information is input into the processor. The transceiver may include a transmitter and a receiver. The transmitter transmits information, and the receiver receives information.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to either of the first aspect and the second aspect and any one of the possible implementations of the first aspect and the second aspect, the processor may be a processor specially configured to perform the method, or may be a processor, for example, a general-purpose processor, that performs the method by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

### BRIEF DESCRIPTION OF DRAWINGS

To describe technical solutions in embodiments of this application more clearly, the following briefly describes accompanying drawings used in embodiments of this application.
FIG. 1 shows an example of a PDCCH configuration;
FIG. 2 is a diagram of an architecture of a communication system according to an embodiment of this application;
FIG. 3 is a diagram of an architecture of a communication system according to an embodiment of this application;
FIG. 4 is a flowchart of a communication method according to an embodiment of this application;
FIG. 5 is a diagram of an example of determining a cyclic shift value corresponding to an M sequence according to an embodiment of this application;
FIG. 6 is a diagram of another example of determining a cyclic shift value corresponding to an M sequence according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of still another communication apparatus according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

In this application, the term "example" or "for example" is used to represent giving an example, an illustration, or a description. Any embodiment or design solution described as an "example" or "for example" in this application should not be explained as being more preferred or having more advantages than another embodiment or design solution. Exactly, use of the term like "example" or "for example" is intended to present a related concept in a specific manner.

"First", "second", and the like mentioned in embodiments of this application do not limit a quantity and an execution sequence, and "first", "second", and the like are not necessarily different. In addition, terms such as "include", "including", and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It may be explicitly and implicitly understood by a person skilled in the art that, in embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

It should be understood that, in this application, "at least one" means one or more, and "a plurality of" means two or more. A term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In the descriptions of this application, an "indication" may include a direct indication and an indirect indication, or may include an explicit indication and an implicit indication. Information indicated by a piece of information is referred to as to-be-indicated information. In a specific implementation process, there are many manners for indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may alternatively be indicated by using an arrangement sequence of various pieces of information that is pre-agreed on (for example, stipulated in a protocol), to reduce indication overheads to some extent.

The following first describes technical terms and related technical knowledge that may be used in embodiments of this application. Terms used in embodiments of this application are only used to explain specific embodiments of this application, but are not intended to limit this application.

### 1. Physical downlink control channel (physical downlink control channel, PDCCH)

In a mobile communication system, the PDCCH is for transmitting downlink control information (downlink control information, DCI). The DCI mainly indicates: (1) downlink scheduling information, used by a terminal device to receive a physical downlink shared channel (physical downlink shared channel, PDSCH); (2) uplink scheduling information (or an uplink grant (uplink grant, UL grant)), used by the terminal device to send a physical uplink shared channel (physical uplink shared channel, PUSCH); and (3) other physical layer control information, such as control signaling such as a slot format indication (slot format indication, SFI), a resource pre-emption indication (pre-emption indicator, PI), and a power control command, for assisting the terminal device in receiving and sending data.

A signal carried on the PDCCH is referred to as a PDCCH signal. In some embodiments, the PDCCH signal may be referred to as a PDCCH for short. In other words, the PDCCH may be a physical downlink control channel, or may be a signal transmitted on the physical downlink control channel.

A network device may schedule a plurality of terminal devices in both uplink and downlink, that is, one network device may send a plurality of pieces of scheduling information in each slot. Each piece of scheduling information is transmitted on an independent PDCCH, that is, one network device may simultaneously send a plurality of PDCCHs in one slot.

Before the network device and the terminal device transmit a PDCCH, the network device needs to send a PDCCH configuration (for example, a control resource set (control resource set, CORESET) and a search space (search space)) to the terminal device, to configure parameters related to PDCCH transmission for the terminal device, and assist the terminal device in receiving the PDCCH.

### 2. Control resource set (control resource set, CORESET):

The CORESET is mainly for configuring frequency domain resource information (for example, specific resource blocks (resource blocks, RBs) occupied by the PDCCH) and some time domain resource information (for example, specific symbols occupied by the PDCCH) of the PDCCH. The network device may configure, for the terminal device, one or more control resource sets for different purposes. One CORESET may be associated with one or more search spaces.

For example, a configuration example of the control resource set is provided below:

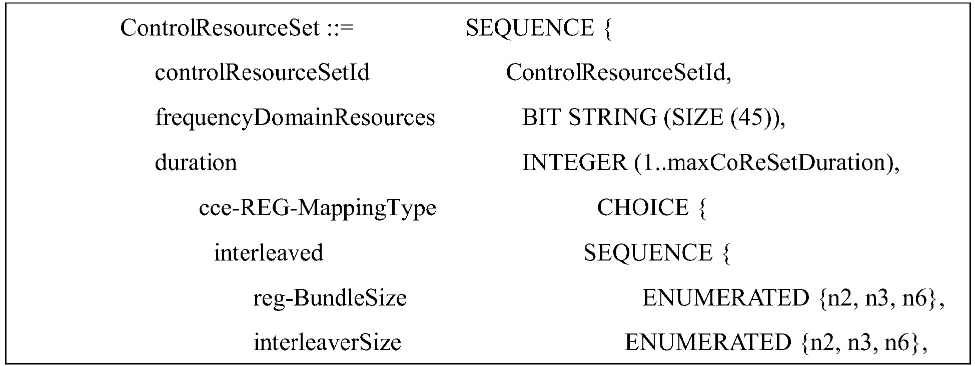

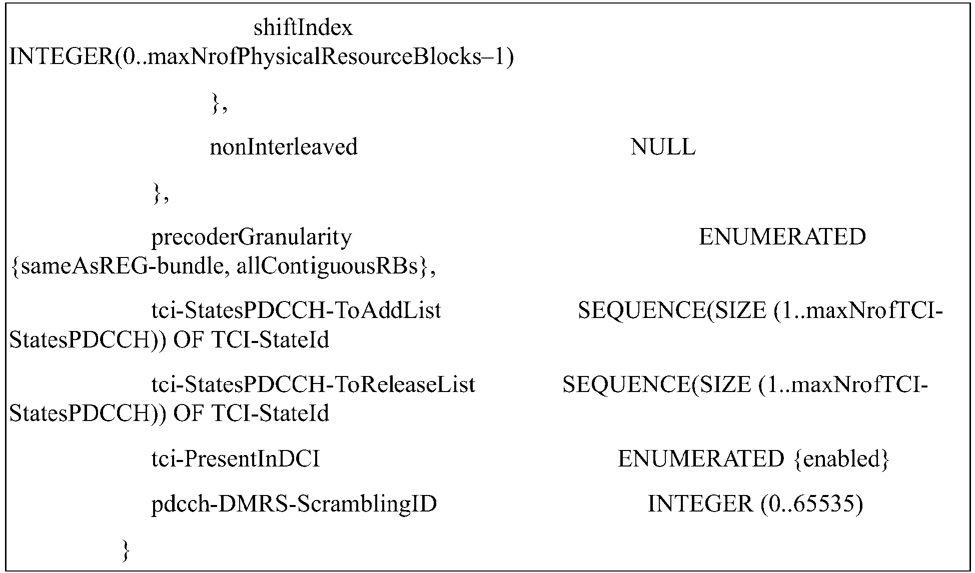

Some parameters in the example are described as follows:
controlResourceSetId indicates an index of the control resource set;
frequencyDomainResources indicates a frequency domain resource of the control resource set, which may be a bitmap (bitmap), where each bit (bit) in the bitmap corresponds to six consecutive RBs;
duration indicates a quantity of consecutive orthogonal frequency division multiplexing (orthogonal frequency division multiplexing, OFDM) symbols occupied by a time domain resource of the control resource set;
cce-REG-MappingType indicates a mapping manner of a control channel element (control channel element, CCE) and a resource element group (resource element group, REG), including interleaving and non-interleaving;
precoderGranularity indicates a precoding granularity of the PDCCH;
tci-StatesPDCCH-ToAddList indicates addition of one or more transmission configuration indicator (transmission configuration indicator, TCI)-states (state);
tci-StatesPDCCH-ToReleaseList indicates release of one or more TCI-states;
tci-PresentInDCI indicates whether DCI includes a TCI field; and
pdcch-DMRS-ScramblingID indicates a scrambling identifier used by the PDCCH.

In some embodiments, a resource (for example, one or more symbols or one or more RBs) configured for the control resource set may also be referred to as a control resource set. In other words, the control resource set may be for representing the resource, or may be for representing a configuration parameter of the resource.

### 3. Search space (search space, SS)

The search space is also referred to as a search space set (search space set), and is mainly for configuring time domain resource information of the PDCCH, or for configuring information related to PDCCH blind detection. The search space may include, for example, a time domain periodicity (or a blind detection periodicity), indicating a quantity of slots (slot) at which the search space appears once; a monitoring occasion (monitoring occasion) in one slot, indicating a symbol position at which the PDCCH may exist in one slot; a PDCCH aggregation level, indicating a quantity of frequency domain resources for carrying the PDCCH; and a quantity of PDCCH candidates (PDCCH candidate) at each aggregation level.

For example, a configuration example of the search space is provided below:

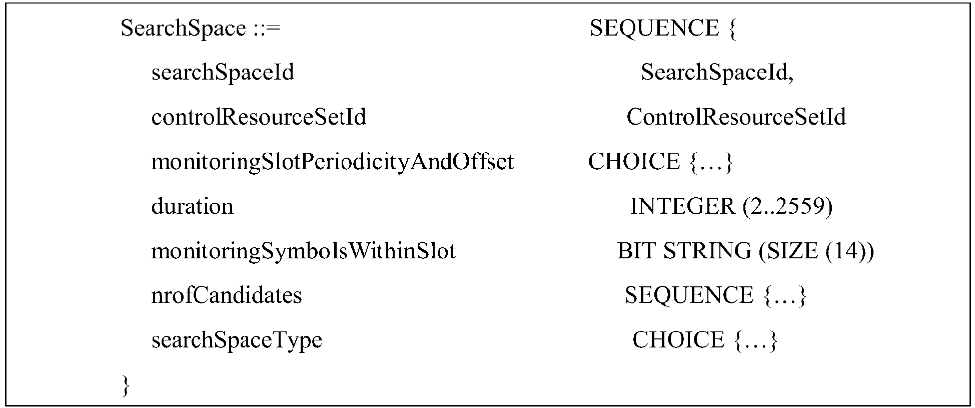

Some parameters in the example are described as follows:
searchSpaceId indicates an index of the search space;
controlResourceSetId indicates an index of a CORESET associated with the search space;
monitoringSlotPeriodicityAndOffset indicates a periodicity of the search space and a specific slot in one periodicity;
duration indicates a quantity of consecutive slots in one periodicity, that is, a quantity of consecutive slots, in one periodicity, in which the search space exists;
monitoringSymbolsWithinSlot indicates a monitoring occasion existing in one slot;
nrofCandidates indicates a total quantity of times of blind detection; and
searchSpaceType indicates a type of a blind detection space, for determining a type of the PDCCH corresponding to the blind detection space.

In some embodiments, a resource configured for the search space may also be referred to as a search space. In other words, the search space may be for representing the resource, or may be for representing a configuration parameter of the resource.

### 4. Monitoring occasion (monitoring occasion, MO)

One search space may include one or more monitoring occasions. In some embodiments, the search space may indicate a monitoring occasion by using the monitoringSymbolsWithinSlot parameter. The monitoringSymbolsWithinSlot parameter is a 14-bit bitmap (bitmap), where each bit corresponds to one OFDM symbol. A value of a bit is 1, indicating that an OFDM symbol corresponding to the bit is a first OFDM symbol in a search space, that is, X consecutive OFDM symbols starting from the OFDM symbol correspond to one monitoring occasion. X is indicated by the duration parameter in the CORESET, and indicates a quantity of time domain symbols occupied by the PDCCH. For example, if a value of monitoringSymbolsWithinSlot is 10000100000000, and a value of duration in the associated CORESET is 3, the search space includes two monitoring occasions, where a first monitoring occasion is on a first OFDM symbol to a third OFDM symbol, and a second monitoring occasion is on a sixth OFDM symbol to an eighth OFDM symbol.

### 5. PDCCH candidate (PDCCH candidate)

The PDCCH candidate is also referred to as a potential PDCCH, and is a time-frequency resource position at which the network device may send a PDCCH, that is, a time-frequency resource position at which the PDCCH may exist is referred to as a PDCCH candidate. The network device may or may not send the PDCCH on a PDCCH candidate. The PDCCH candidate may be configured based on a set aggregation level. For example, the network device may configure, for the terminal device, two PDCCH candidates whose aggregation levels are 4 and four PDCCH candidates whose aggregation levels are 8. In this case, the terminal device performs blind detection on the two PDCCH candidates whose aggregation levels are 4, and performs blind detection on the four PDCCH candidates whose aggregation levels are 8. The network device configures the PDCCH candidates to control a quantity of times of blind detection at each aggregation level, to control complexity of PDCCH blind detection. Time-frequency positions of the PDCCH candidates at each specific aggregation level are obtained through calculation based on a specific formula. The terminal device may determine the time-frequency positions of the PDCCH candidates at each specific aggregation level, to attempt to receive the PDCCH at the time-frequency positions.

It should be understood that terms such as the control resource set, the search space, the monitoring occasion, and the PDCCH candidate in this application are all for ease of description, and are not limited to literal meanings. For example, the control resource set may be a configuration parameter of PDCCH frequency domain information in a general manner, and may be replaced with any other term representing the PDCCH frequency domain information. For another example, the search space may be a configuration parameter of PDCCH time domain information or PDCCH blind detection information in a general manner, and may be replaced with any other term representing the PDCCH time domain information or the PDCCH blind detection information. For another example, the monitoring occasion may be a configuration parameter of a time domain position of a PDCCH in a slot in a general manner, and may be replaced with any other term representing the time domain position of the PDCCH in the slot. For another example, the PDCCH candidate may be a configuration parameter of a time-frequency resource position at which the PDCCH may exist in a general manner, and may be replaced with any other term representing the time-frequency resource position at which the PDCCH may exist.

All possible time-frequency resource positions of the PDCCH may be determined based on the control resource set and the search space associated with the control resource set, and the terminal device may perform blind detection on the PDCCH at the time-frequency resource positions.

### 6. PDCCH blind detection

The PDCCH blind detection is a method for receiving the PDCCH by the terminal device. Specifically, when the terminal device does not determine a specific time-frequency resource position of the PDCCH sent by the network device to the terminal device, the terminal device attempts, by using a blind test method, to receive the PDCCH at each time-frequency resource position (that is, each PDCCH candidate) at which the PDCCH may exist. A process in which the terminal device traverses each PDCCH candidate and sequentially determines whether the PDCCH of the terminal device exists on a time-frequency resource corresponding to each PDCCH candidate is blind detection. It may be understood that, specific PDCCH candidates that need to be traversed by the terminal device are configured by the network device for the terminal device in advance (for example, configured by using the CORESET and the search space).

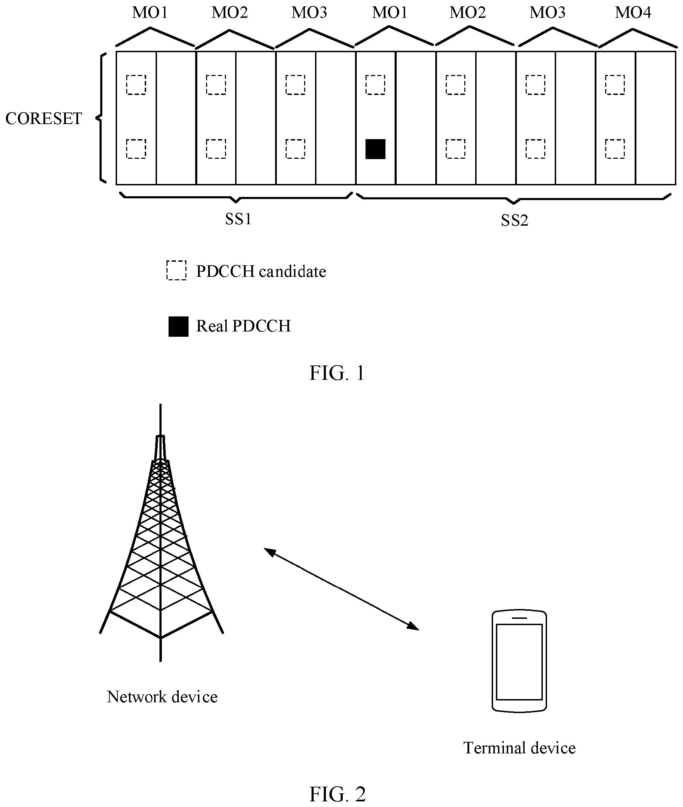

FIG. 1 shows an example of a PDCCH configuration. The network device configures a control resource set (CORESET) for the terminal device, and the CORESET is associated with two search spaces (SS1 and SS2). Three monitoring occasions (MO1, MO2, and MO3) are configured in the SS1, and four monitoring occasions (MO1, MO2, MO3, and MO4) are configured in the SS2. Two PDCCH candidates are configured in both the SS1 and the SS2, and the two PDCCH candidates appear at each monitoring occasion. Therefore, there are actually 3×2=6 time-frequency resource positions at which the PDCCH may exist in the SS1, and there are actually 4×2=8 time-frequency resource positions at which the PDCCH may exist in the SS2. When receiving the PDCCH, the terminal device sequentially traverses a signal on each PDCCH candidate at each monitoring occasion to perform receiving processing, such as descrambling, rate de-matching, decoding, and CRC check. If the decoding succeeds, it indicates that the PDCCH of the terminal device actually exists at the monitoring occasion. If the decoding fails, it indicates that the PDCCH of the terminal device does not exist at the monitoring occasion. According to the example provided in FIG. 1, the terminal device needs to traverse 14 PDCCH candidates to detect the PDCCH.

A disadvantage of the PDCCH receiving method is that the terminal device needs to perform blind detection on all time-frequency resource positions (for example, all PDCCH candidates) configured by the network device for the terminal device, resulting in high complexity.

In view of this, the technical solutions in embodiments of this application are provided, to reduce complexity of receiving a PDCCH, so that a terminal device receives the PDCCH as required.

The technical solutions in embodiments of this application may be applied to various communication systems. For example, a 5th generation (5th generation, 5G) mobile communication system, a 6th generation (6th generation, 6G) mobile communication system, another future evolved system, or various other wireless communication systems that use a radio access technology may use the technical solutions in embodiments of this application.

FIG. 2 is a diagram of an architecture of a communication system according to an embodiment of this application. As shown in FIG. 2, the communication system includes a terminal device and a network device. It may be understood that FIG. 2 is described by using one network device and one terminal device as an example. Actually, the communication system may alternatively include more terminal devices and more network devices.

The network device may include an access network device. Optionally, the network device may further include a core network device. Unless otherwise specified, the network device in this embodiment of this application is the access network device.

The access network device may also be referred to as an access network element, a network apparatus, a radio access network (radio access network, RAN) entity, a RAN node, an access node, or the like, to help the terminal device implement radio access. Optionally, the RAN may be a cellular system related to the 3rd generation partnership project (3rd generation partnership project, 3GPP), for example, a 4th generation (4th generation, 4G) mobile communication system (for example, a long term evolution (long term evolution, LTE) system), a 5G mobile communication system (for example, a new radio (new radio, NR) system), or a futureoriented evolved system (for example, a 6G mobile communication system). The RAN may alternatively be an open access network (open RAN, O-RAN or ORAN), a cloud radio access network (cloud radio access network, CRAN), or a wireless fidelity (wireless fidelity, Wi-Fi) system. The RAN may alternatively be a communication system that integrates two or more of the foregoing systems.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The network device may alternatively be a macro base station, a micro base station or an indoor base station, a relay node or a donor node, or a radio controller in a CRAN scenario. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN or open RAN or ORAN) system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). For ease of description, the CU, the CU-CP, the CU-UP, the DU, and the RU are used as examples for description in this application. Any one unit of the CU (or the CU-CP and the CU-UP), the DU, and the RU in this application may be implemented by using a software module, a hardware module, or a combination of a software module and a hardware module.

In embodiments of this application, a function of the network device may alternatively be performed by a module (for example, a chip) in the network device, or may be performed by a control subsystem including the function of the network device. The control subsystem including the function of the network device herein may be a control center in the foregoing application scenarios, such as a smart grid, industrial control, smart transportation, and a smart city.

The terminal device may also be referred to as a terminal, a terminal apparatus, user equipment (user equipment, UE), a user apparatus, an access terminal, a subscriber unit, a subscriber station, a mobile station (mobile station, MS), a remote station, a remote terminal, a mobile device, a mobile terminal, a user terminal, a terminal unit, a terminal station, a terminal apparatus, a wireless communication device, a user agent, or a subscriber apparatus A communication module, a circuit, or a chip that performs a corresponding communication function is usually disposed in the terminal. Program instructions for executing the corresponding communication function may be further configured in the terminal.

The terminal device may be widely used in various scenarios, for example, device-to-device (device-to-device, D2D), vehicle-to-everything (vehicle-to-everything, V2X) communication, machine type communication (machine type communication, MTC), internet of things (internet of things, IOT), virtual reality, augmented reality, industrial control, autonomous driving, telemedicine, a smart grid, smart furniture, a smart office, smart wearables, smart transportation, a smart city, or a smart home. For example, the terminal device may be a mobile phone, a personal digital assistant (personal digital assistant, PDA) computer, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal device is not limited in embodiments of this application.

In embodiments of this application, a function of the terminal device may alternatively be performed by a module (for example, a chip or a modem) in the terminal, or may be performed by an apparatus including the function of the terminal.

The network device and the terminal device may be fixed or movable. The network device and the terminal device may be deployed on the land, including an indoor device, an outdoor device, a handheld device, or a vehicle-mounted device; may be deployed on the water surface; or may be deployed on an airplane, a balloon, and an artificial satellite in the air. Application scenarios of the network device and the terminal device are not limited in embodiments of this application.

It may be understood that a network architecture and an application scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new application scenarios, the technical solutions provided in embodiments of this application are also applicable to similar technical problems. In embodiments of this application, the communication system shown in FIG. 2 is used as an example for description. When the technical solutions in embodiments of this application are applied to another communication system, the devices, components, modules, and the like in embodiments may be replaced with corresponding devices, components, and modules in the another communication system. This is not limited.

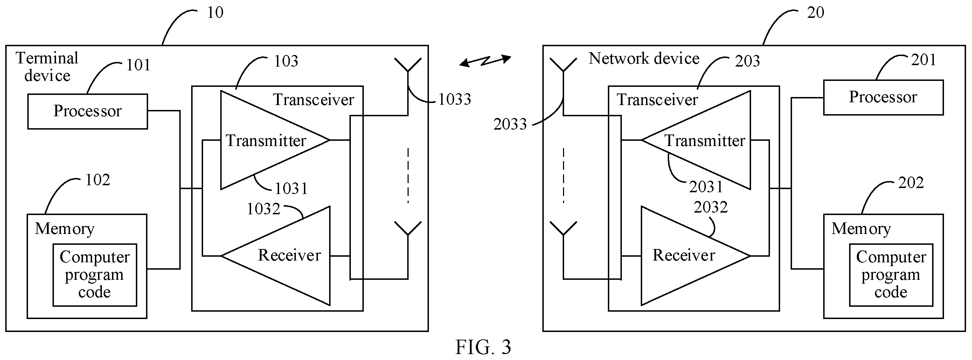

Communication between each network device and each terminal device in the communication system shown in FIG. 2 may alternatively be represented in another form. FIG. 3 is a diagram of an architecture of a communication system according to an embodiment of this application. As shown in FIG. 3, a terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive, via the antenna 1033, a signal sent by the network device 20. The transmitter 1031 may be configured to send a signal to the network device 20 via the antenna 1033. The transmitter 2031 may be configured to send a signal to the terminal device 10 via the antenna 2033. The receiver 2032 may be configured to receive, via the antenna 2033, a signal sent by the terminal device 10.

The following describes a communication method provided in embodiments of this application.

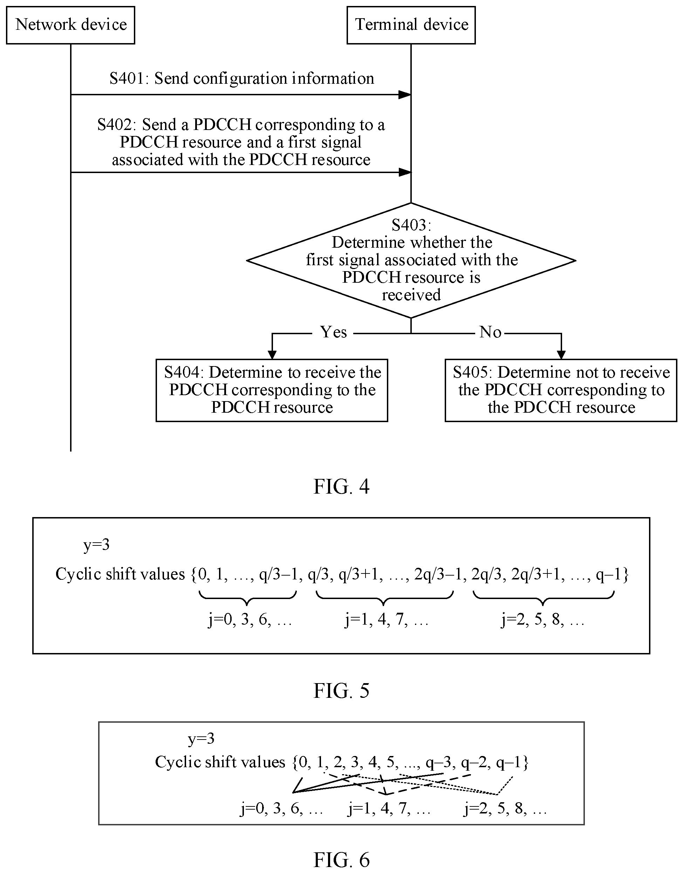

FIG. 4 is a flowchart of a communication method according to an embodiment of this application. The method may be applied to the communication system shown in FIG. 2 or FIG. 3. Unless otherwise specified, a "network device" in this application may be the network device (for example, the network device shown in FIG. 2 or FIG. 3), may be a component (for example, a processor, a chip, or a chip system) in the network device, or may be a logical module or software that can implement all or some functions of the network device. A "terminal device" in this application may be the terminal device (for example, the terminal device shown in FIG. 2 or FIG. 3), may be a component (for example, a processor, a chip, or a chip system) in the terminal device, or may be a logical module or software that can implement all or some functions of the terminal device.

As shown in FIG. 4, the communication method may include the following step S401 to step S405.

S401: The network device sends configuration information. Correspondingly, the terminal device receives the configuration information.

The configuration information includes a PDCCH resource. The PDCCH resource includes one or more of a control resource set (CORESET), a search space (search space), a monitoring occasion (monitoring occasion), and a PDCCH candidate (PDCCH candidate).

In some embodiments, the network device may configure one or more CORESETs and one or more search spaces for the terminal device. Each CORESET is associated with one or more search spaces, each search space may include one or more monitoring occasions, and each search space may further include one or more PDCCH candidates. The one or more PDCCH candidates included in the search space exist in each monitoring occasion included in the search space.

The PDCCH resource is associated with a first signal, and the configuration information may further include a configuration parameter of the first signal. The first signal is for determining (or indicates) whether a PDCCH exists, the first signal is used by the terminal device to determine (or determine) whether a PDCCH sent to the terminal device exists, the first signal is for determining (or indicates) whether the network device sends a PDCCH, the first signal is used by the terminal device to determine (or determine) whether the network device sends a PDCCH to the terminal device, the first signal is for determining (or indicates) specific time-frequency resource positions at which a PDCCH is sent, the first signal is used by the terminal device to determine (or determine) specific time-frequency resource positions at which the network device sends a PDCCH to the terminal device, the first signal indicates whether the terminal device needs to perform PDCCH detection, the first signal indicates specific time-frequency resource positions (for example, time-frequency resource positions associated with the first signal) at which the terminal device needs to perform PDCCH detection, the first signal is used by the terminal device to discover a PDCCH sent to the terminal device, or the like.

In a possible design, a name of the first signal may be a control discovery signal (control discovery signal, CDS), indicating that the first signal may be used by the terminal device to discover a PDCCH. The name of the first signal may be a control detection signal (control detection signal, CDS), indicating that the first signal may be used by the terminal device to detect a PDCCH. It should be understood that this is merely an example, and a specific name of the first signal is not limited in embodiments of this application.

For example, the configuration parameter of the first signal may include one or more of the following:
1. First parameter. The first parameter indicates whether to use a first-signal-based PDCCH receiving mechanism. In other words, the first parameter indicates whether to receive the PDCCH based on the first signal.

For example, when the first parameter indicates to use the first-signal-based PDCCH receiving mechanism, the terminal device may receive the PDCCH based on the first signal. For example, the terminal device receives the PDCCH after receiving the first signal. For another example, when the first parameter indicates not to use the first-signal-based PDCCH receiving mechanism, the first parameter may not receive the PDCCH based on the first signal. For example, the terminal device may receive the PDCCH in a PDCCH blind detection manner.

2. Type of the first signal. The type of the first signal is a type of a used first signal, and may be specifically a type of a first signal used by the network device, a type of a first signal that is allowed to be used by the terminal device, and/or the like. For example, the terminal device reports a type of a first signal supported by the terminal device, and the network device configures the terminal device to use or not to use the type of the first signal. For another example, the terminal device reports a plurality of types of first signals supported by the terminal device, and the network device configures the terminal device to specifically use one of the types of the first signals. For another example, a protocol supports a plurality of types of first signals, and the network device configures the terminal device to specifically use one of the types of the first signals.

For example, the type of the first signal may be distinguished based on a type of the PDCCH resource associated with the first signal. The type of the first signal may include but is not limited to one or more of the following:
(1) First signal associated with the control resource set. When the type of the first signal is the first signal associated with the control resource set, the terminal device needs to receive the PDCCH in the control resource set associated with the first signal.
(2) First signal associated with the search space. When the type of the first signal is the first signal associated with the search space, the terminal device needs to receive the PDCCH in the search space associated with the first signal.
(3) First signal associated with the monitoring occasion. When the type of the first signal is the first signal associated with the monitoring occasion, the terminal device needs to receive the PDCCH at the monitoring occasion associated with the first signal.
(4) First signal associated with the PDCCH candidate. When the type of the first signal is the first signal associated with the PDCCH candidate, the terminal device needs to receive the PDCCH on the PDCCH candidate associated with the first signal.

3. Association relationship between the first signal and the PDCCH resource. The association relationship between the first signal and the PDCCH resource indicates a specific PDCCH resource with which the first signal is associated.

For example, the association relationship between the first signal and the PDCCH resource may include but is not limited to one or more of the following:
(1) Association relationship between the first signal and the control resource set.

The association relationship between the first signal and the control resource set indicates that the type of the PDCCH resource associated with the first signal is the control resource set, and may further indicate associations between specific first signals and specific control resource sets. The network device may configure one first signal to be associated with one control resource set. Alternatively, the network device may configure one first signal to be associated with a plurality of control resource sets.

(2) Association relationship between the first signal and the search space.

The association relationship between the first signal and the search space indicates that the type of the PDCCH resource associated with the first signal is the search space, and may further indicate associations between specific first signals and specific search spaces. The network device may configure one first signal to be associated with one search space. Alternatively, the network device may configure one first signal to be associated with a plurality of search spaces.

(3) Association relationship between the first signal and the monitoring occasion.

The association relationship between the first signal and the monitoring occasion indicates that the type of the PDCCH resource associated with the first signal is the monitoring occasion, and may further indicate associations between specific first signals and specific monitoring occasions. The network device may configure one first signal to be associated with one monitoring occasion. Alternatively, the network device may configure one first signal to be associated with a plurality of monitoring occasions.

(4) Association relationship between the first signal and the PDCCH candidate.

The association relationship between the first signal and the PDCCH candidate indicates that the type of the PDCCH resource associated with the first signal is the PDCCH candidate, and may further indicate associations between specific first signals and specific PDCCH candidates. The network device may configure one first signal to be associated with one PDCCH candidate. Alternatively, the network device may configure one first signal to be associated with a plurality of PDCCH candidates.

In a possible design, the configuration message is a radio resource control (radio resource control, RRC) message (or RRC signaling), or the configuration message is carried in the RRC message (or the RRC signaling).

S402: The network device sends the PDCCH corresponding to the PDCCH resource and the first signal associated with the PDCCH resource.

The first signal associated with the PDCCH resource may include one or more of the following:
a first signal associated with one or more control resource sets;
a first signal associated with one or more search spaces;
a first signal associated with one or more monitoring occasions; and
a first signal associated with one or more PDCCH candidates.

S403: The terminal device determines whether the first signal associated with the PDCCH resource is received.

The terminal device may receive the PDCCH by using a specific first signal, where the first signal may be associated with the PDCCH resource. Alternatively, the first signal used by the terminal device may be represented as the first signal associated with the PDCCH resource corresponding to the terminal device, or may be represented as the first signal corresponding to the terminal device. The three may be used interchangeably.

After receiving a signal (denoted as a second signal for distinction) on a time-frequency resource corresponding to the first signal, the terminal device may perform matching on the second signal and the first signal corresponding to the terminal device, and determine, based on a matching result, whether the first signal associated with the PDCCH resource is received.

For example, whether the first signal associated with the PDCCH resource is received may be determined by detecting whether the second signal matches the first signal corresponding to the terminal device. For example, if the second signal matches the first signal corresponding to the terminal device, the terminal device receives the first signal associated with the PDCCH resource. For another example, if the second signal does not match the first signal corresponding to the terminal device, the terminal device does not receive the first signal associated with the PDCCH resource.

Optionally, a correlation between the second signal and the first signal corresponding to the terminal device is calculated, and such a correlation is used to measure a possibility that the second signal matches the first signal corresponding to the terminal device. For example, if the correlation between the second signal and the first signal corresponding to the terminal device is higher, it may be considered that the possibility that the second signal matches the first signal corresponding to the terminal device is higher. For another example, if the correlation between the second signal and the first signal corresponding to the terminal device is lower, it may be considered that the possibility that the second signal matches the first signal corresponding to the terminal device is lower.

In a possible implementation, if the correlation between the second signal and the first signal corresponding to the terminal device is greater than or equal to a threshold, it may be determined that the second signal matches the first signal corresponding to the terminal device, to determine that the first signal associated with the PDCCH resource is received. If the correlation between the second signal and the first signal corresponding to the terminal device is less than the threshold, it may be determined that the second signal does not match the first signal corresponding to the terminal device, to determine that the first signal associated with the PDCCH resource is not received. The threshold may also be referred to as a threshold, and may be predefined or preconfigured.

In the foregoing implementation, whether the received signal matches the first signal corresponding to the terminal device is detected based on the correlation between the first signal corresponding to the terminal device and the signal received on the time-frequency resource corresponding to the first signal and a value relationship between the correlation and the threshold. In this way, whether the first signal associated with the PDCCH resource is received can be quickly and accurately determined.

In a possible case, if the first signal associated with the PDCCH resource is received, the terminal device performs step S404.

S404: Determine to receive the PDCCH corresponding to the PDCCH resource.

If the terminal device receives the first signal associated with the PDCCH resource, it indicates that the PDCCH corresponding to the PDCCH resource is sent to the terminal device. Therefore, when the terminal device receives the first signal associated with the PDCCH resource, the terminal device receives (or detects or blindly detects) the PDCCH corresponding to the PDCCH resource.

In another possible case, if the first signal associated with the PDCCH resource is not received, the terminal device performs step S405.

S405: Determine not to receive the PDCCH corresponding to the PDCCH resource.

If the terminal device does not receive the first signal associated with the PDCCH resource, it indicates that the PDCCH corresponding to the PDCCH resource is not sent to the terminal device. Therefore, when the terminal device does not receive the first signal associated with the PDCCH resource, the terminal device does not receive (or detect or blindly detect) the PDCCH corresponding to the PDCCH resource.

In this embodiment of this application, the first signal is introduced, and the first signal is associated with the PDCCH resource. The terminal device may determine, based on whether the first signal associated with the PDCCH resource is received, whether to receive the PDCCH corresponding to the PDCCH resource. Specifically, the terminal device receives the PDCCH corresponding to the PDCCH resource only when receiving the first signal associated with the PDCCH resource, and does not receive the PDCCH corresponding to the PDCCH resource when not receiving the first signal associated with the PDCCH resource. In this way, the terminal device can receive the PDCCH as required, to prevent the terminal device from traversing all time-frequency resource positions at which the PDCCH may exist to receive the PDCCH, thereby reducing complexity of receiving the PDCCH by the terminal device.

In a possible design, the first signal is an M sequence. The M sequence may also be referred to as an m sequence.

### 1. Definition of the M sequence

The M sequence is a 0/1 sequence. In other words, the M sequence includes a plurality of elements, and each element has two values: 0 and 1. The M sequence may be generated by using an initial sequence and an iterative formula. A length of the M sequence is always equal to 2^{a}-1, and an M sequence whose length is 2^{a}-1 is generated by using an initial sequence whose length is a and a corresponding iterative formula, where a is a positive integer, and represents a length of the initial sequence. For example, an M sequence whose length is 15 may be generated by using an initial sequence whose length is 4 and a corresponding iterative formula.

For example, an example of the M sequence is provided below:
An initial sequence of an M sequence x() whose length is 15 is [1, 0, 0, 0], that is, x(3)=1, x(2)=0, x(1)=0, and x(0)=0. An iterative formula is: x(n+4)=(x(n+3)+x(n))%2, indicating that for any n, a sequence element whose index is n+4 may be obtained by performing modulo-2 summation on two sequence elements whose indexes are n+3 and n, where n is an integer greater than or equal to 0. A value of a sequence element corresponding to each index may be sequentially obtained according to the iterative formula. The operator "%" indicates a modulo operation or a remainder operation, namely, a mod (mod) operation. For example, b%c means b mod c. Detailed descriptions are as follows:
Assuming that n=0, x(4)=(x(3)+x(0))%2=(1+0)%2=1, so that the sequence may be extended to [1, 1, 0, 0, 0].
Assuming that n=1, x(5)=(x(4)+x(1))%2=(1+0)%2=1, so that the sequence may be extended to [1, 1, 1, 0, 0, 0].
Assuming that n=2, x(6)=(x(5)+x(2))%2=(1+0)%2=1, so that the sequence may be extended to [1, 1, 1, 1, 0, 0, 0].
Assuming that n=3, x(7)=(x(6)+x(3))%2=(1+1)%2=0, so that the sequence may be extended to [0, 1, 1, 1, 1, 0, 0, 0].
Assuming that n=4, x(8)=(x(7)+x(4))%2=(0+1)%2=1, so that the sequence may be extended to [1, 0, 1, 1, 1, 1, 0, 0, 0].
Assuming that n=5, x(9)=(x(8)+x(5))%2=(1+1)%2=0, so that the sequence may be extended to [0, 1, 0, 1, 1, 1, 1, 0, 0, 0].
Assuming that n=6, x(10)=(x(9)+x(6))%2=(0+1)%2=1, so that the sequence may be extended to [1, 0, 1, 0, 1, 1, 1, 1, 0, 0, 0].
Assuming that n=7, x(11)=(x(10)+x(7))%2=(1+0)%2=1, so that the sequence may be extended to [1, 1, 0, 1, 0, 1, 1, 1, 1, 0, 0, 0].
Assuming that n=8, x(12)=(x(11)+x(8))%2=(1+1)%2=0, so that the sequence may be extended to [0, 1, 1, 0, 1, 0, 1, 1, 1, 1, 0, 0, 0].
Assuming that n=9, x(13)=(x(12)+x(9))%2=(0+0)%2=0, so that the sequence may be extended to [0, 0, 1, 1, 0, 1, 0, 1, 1, 1, 1, 0, 0, 0].
Assuming that n=10, x(14)=(x(13)+x(10))%2=(0+1)%2=1, so that the sequence may be extended to [1, 0, 0, 1, 1, 0, 1, 0, 1, 1, 1, 1, 0, 0, 0].

Therefore, a first M sequence x(n) whose length is 15 may be obtained, where 0≤n<15. For ease of description, the M sequence is referred to as a base sequence. For example, a base sequence of the M sequence whose length is 2^{a}-1 is x(n), where 0≤n<2^{a}-1.

After the base sequence is obtained, a new M sequence may be further generated according to the iterative formula. Specifically, based on the base sequence whose length is 2^{a}-1, a sequence element x(2^{a}-1) may be generated by using the iterative formula. Because a sequence length needs to be kept as 2^{a}-1, a previous sequence element x(0) needs to be discarded, to obtain a new M sequence: x(n+1), where 0≤n<2^{a}-1. x(n+1) represents that a cyclic shift 1 is performed on the base sequence x(n). A new sequence x(n+m) corresponding to any cyclic shift m may be obtained by using the foregoing method. The M sequence has a periodicity: x(n+2^{a}-1)=x(n), that is, after a cyclic shift 2^{a}-1 is performed, a same M sequence is obtained. Therefore, there are a maximum of 2^{a}-1 different M sequences obtained by using the foregoing method, that is, a total quantity of cyclic shifts m having a distinguishing degree is 2^{a}-1, where m may also be referred to as a cyclic shift value, m is an integer greater than or equal to 0, and 0≤m<2^{a}-1.

### 2. Characteristic of the M sequence

As described above, based on the base sequence x(n) whose length is 2^{a}-1, the new M sequence x(n+m) may be generated by performing the cyclic shift m on the base sequence x(n), and the maximum of 2^{a}-1 different M sequences (including the base sequence) may be generated.

The M sequence has a good autocorrelation. To be specific, a correlation between two same M sequences is higher, but a correlation between two M sequences generated based on different cyclic shift values m for a same base sequence is lower.

The good autocorrelation characteristic of the M sequence may be for determining whether the network device sends the first signal corresponding to the terminal device, in other words, the characteristic may be used by the terminal device to determine whether the received signal is the first signal corresponding to the terminal device. Specifically, different M sequences may be allocated to different terminal devices (in other words, different cyclic shift values m are allocated to different terminal devices) as first signals corresponding to the terminal devices. A terminal device calculates a correlation between a first signal corresponding to the terminal device and a signal received on a time-frequency resource corresponding to the first signal, and determines, based on a correlation calculation result, whether the network device sends the first signal corresponding to the terminal device.

### 3. Allocation of the M sequence

The following describes how to allocate different first signals (in this example, the first signal is an M sequence) to different terminal devices. The network device may send the first signal to the terminal device in one or more cells. In other words, the terminal device discovers a control channel in the one or more cells by using the first signal.

The following uses an M sequence used by the terminal device in a cell (denoted as a first cell for brevity of description) corresponding to the PDCCH resource as an example to describe how to determine an initial sequence, an iterative formula, and a cyclic shift value that correspond to the M sequence.

### (1) Initial sequence

In a possible implementation, the initial sequence corresponding to the M sequence is predefined or preconfigured.

For example, the initial sequence corresponding to the M sequence may be a fixed value stipulated in a protocol, and all cells use the fixed value. For another example, the initial sequence corresponding to the M sequence may be one of b initial sequences supported in the protocol, where b is an integer greater than or equal to 1. A specific initial sequence in the b initial sequences supported in the protocol, which is the initial sequence corresponding to the M sequence, may be indicated by the network device (for example, configured by using RRC signaling).

Each initial sequence supported in the protocol may be considered as a candidate initial sequence, and the b initial sequences supported in the protocol may form a candidate initial sequence set. In other words, the candidate initial sequence set includes b candidate initial sequences, and the initial sequence corresponding to the M sequence is one candidate initial sequence in the candidate initial sequence set.

In another possible implementation, the initial sequence corresponding to the M sequence is determined based on an index of a first cell and a candidate initial sequence set.

For example, a cell index may be represented by a physical cell identifier, and the index of the first cell may be a physical cell identifier of the first cell.

The index of the first cell is denoted as a cell index j, and one candidate initial sequence may be determined, based on the cell index j, in the b candidate initial sequences included in the candidate initial sequence set as the initial sequence corresponding to the M sequence.

Optionally, the initial sequence corresponding to the M sequence is determined based on a remainder (j%b) obtained by the cell index j modulo a candidate initial sequence quantity b. For example, numbers of the b candidate initial sequences may be respectively 0, 1, 2, ..., b-2, and b-1, a remainder (j%b) obtained by j modulo b is calculated, and a candidate initial sequence whose number is the same as the remainder (j%b) is used as the initial sequence corresponding to the M sequence.

### (2) Iterative formula

In a possible implementation, the iterative formula corresponding to the M sequence is predefined or preconfigured.

For example, the iterative formula corresponding to the M sequence may be a fixed value stipulated in the protocol, and all the cells use the fixed value. For another example, the iterative formula corresponding to the M sequence may be one of c iterative formulas supported in the protocol, where c is an integer greater than or equal to 1. A specific iterative formula in the c iterative formulas supported in the protocol, which is the iterative formula corresponding to the M sequence, may be indicated by the network device (for example, configured by using RRC signaling).

Each iterative formula supported in the protocol may be considered as a candidate iterative formula, and the c iterative formulas supported in the protocol may form a candidate iterative formula set. In other words, the candidate iterative formula set includes c candidate iterative formulas, and the iterative formula corresponding to the M sequence is one candidate iterative formula in the candidate iterative formula set.

In another possible implementation, the iterative formula corresponding to the M sequence is determined based on the cell index j and a candidate iterative formula set.

One candidate iterative formula may be determined, based on the cell index j, in the c candidate iterative formulas included in the candidate iterative formula set as the iterative formula corresponding to the M sequence.

Optionally, the iterative formula corresponding to the M sequence is determined based on a remainder (j%c) obtained by the cell index j modulo a candidate iterative formula quantity c. For example, numbers of the c candidate iterative formulas may be respectively 0, 1, 2, ..., c-2, and c-1, a remainder (j%c) obtained by j modulo c is calculated, and a candidate iterative formula whose number is the same as the remainder (j%c) is used as the iterative formula corresponding to the M sequence.

### (3) Cyclic shift value

In a possible implementation, the cyclic shift value corresponding to the M sequence is predefined or preconfigured.

For example, the cyclic shift value corresponding to the M sequence may be a fixed value stipulated in the protocol, and all the cells use the fixed value. For another example, the cyclic shift value corresponding to the M sequence may be one of q cyclic shift values, where q represents a length of the M sequence. A specific cyclic shift value in the q cyclic shift values, which is the cyclic shift value corresponding to the M sequence, may be indicated by the network device (for example, configured by using RRC signaling).

Each of the q cyclic shift values may be considered as a candidate cyclic shift value, and the q cyclic shift values may form a candidate cyclic shift value set. In other words, the candidate cyclic shift value set includes q candidate cyclic shift values, and the cyclic shift value corresponding to the M sequence is one candidate cyclic shift value in the candidate cyclic shift value set. The q candidate cyclic shift values range from 0 to q-1. For example, if the length q of the M sequence is 15, the candidate cyclic shift value set includes the following 15 candidate cyclic shift values: 0, 1, 2, 3, 4, 5, 6, 7, 8, 9, 10, 11, 12, 13, and 14.

In another possible implementation, the cyclic shift value corresponding to the M sequence is determined based on an index of the terminal device.

The index of the terminal device may be configured by the network device for the terminal device, or may be reported by the terminal device to the network device. For example, the index of the terminal device may be an identifier of the terminal device, for example, a radio network temporary identifier (radio network temporary identifier, RNTI) of the terminal device. The RNTI may be a cell radio network temporary identifier (cell radio network temporary identifier, C-RNTI), or may be an RNTI of another type.

The index of the terminal device is denoted as a terminal device index i, and one candidate cyclic shift value may be determined, based on the terminal device index i, in the q candidate cyclic shift values included in the candidate cyclic shift value set as a cyclic shift value m corresponding to the M sequence.

Optionally, the cyclic shift value corresponding to the M sequence is determined based on a remainder (i%q) obtained by the terminal device index i modulo the length q of the M sequence. For example, the cyclic shift value m corresponding to the M sequence may be determined based on the terminal device index i in either of the following two manners:
Manner 1: m=i%q, or m=i, where q is the length of the M sequence. Because of the periodicity of the M sequence, cyclic shifts m=i%q and m=i may be considered as being equivalent.
Manner 2: m=i*p%q, or m=i*p, where p is a positive integer, and q is the length of the M sequence. A value of P may be for controlling a cyclic shift interval between two adjacent M sequences. Because of the periodicity of the M sequence, cyclic shifts m=i*p%q and m=i*p may be considered as being equivalent.

It may be understood that the foregoing two manners are merely examples rather than limitations, and actually, there may be other possibilities.

In the foregoing solution, the cyclic shift value corresponding to the M sequence is determined based on the terminal device index. In this way, different terminal devices in a same cell can use different cyclic shift values as much as possible, to help ensure that different terminal devices in the same cell correspond to different M sequences, and reduce a misjudgment probability.

In still another possible implementation, the cyclic shift value corresponding to the M sequence is determined based on the cell index j and the terminal device index i.

In some possible cases, two terminal devices in different cells may use a same cyclic shift value. In addition, if the two terminal devices also use a same base sequence, there is a misjudgment probability. To be specific, one terminal device may incorrectly determine a first signal sent by the network device to the other terminal device as a first signal sent to the terminal device. However, the misjudgment probability is small, and the overall impact is also small.

To ensure that different terminal devices in different cells correspond to different M sequences, the cells may be grouped, and terminal devices in different cell groups use different cyclic shift values. For example, all cells may be grouped into y groups, where y is a positive integer, and represents a cell group quantity. The cell group quantity may be predefined or preconfigured, for example, may be stipulated in the protocol, or may be indicated by the network device (for example, configured by using RRC signaling).

A cell group to which the first cell belongs is denoted as a first cell group. For example, the first cell group may be determined in the following manners:
Manner 1: The first cell group is predefined or preconfigured.

Cell grouping information (for example, a specific cell group to which each cell belongs) may be stipulated in the protocol, or may be indicated by the network device (for example, configured by using RRC signaling). In this way, a specific cell group to which the first cell belongs, that is, the first cell group, may be determined based on the cell grouping information stipulated in the protocol or configured by the network device.

Manner 2: The first cell group is determined based on the cell index j and the cell group quantity y.

Cell grouping information (for example, a specific cell group to which each cell belongs) may be determined based on an index of each cell and the cell group quantity y. Optionally, a remainder obtained by the index of each cell modulo the cell group quantity y is calculated, and cells having a same remainder are grouped into a same cell group. For example, a cell having a remainder of 0 belongs to a first group (or referred to as a first cell group), a cell having a remainder of 1 belongs to a second group (or referred to as a second cell group), and by analogy, a cell having a remainder of y-1 belongs to a y^{th} group (or referred to as a y^{th} cell group). In this way, a specific cell group to which the first cell belongs, that is, the first cell group, may be determined based on a remainder (j%y) obtained by the cell index j modulo the cell group quantity y.

After the cells are grouped, the candidate cyclic shift values may be further grouped.

In a possible implementation, cyclic shift value groups are obtained by grouping the candidate cyclic shift value set based on the cell group quantity y.

The candidate cyclic shift value set includes the q candidate cyclic shift values, and the q candidate cyclic shift values are grouped into y groups, to obtain y cyclic shift value groups. That is, a cyclic shift value group quantity and the cell group quantity are the same (both are y). Each cell group corresponds to one cyclic shift value group, and different cell groups correspond to different cyclic shift value groups.

A correspondence between the cell group and the cyclic shift value group (for example, a specific cyclic shift value group corresponding to each cell group) may be stipulated in the protocol, or may be indicated by the network device (for example, configured by using RRC signaling). For example, the first cell group corresponds to a first candidate cyclic shift value group, a second cell corresponds to a second candidate cyclic shift value group, and so forth.

For example, the q candidate cyclic shift values may be grouped into the y groups based on the cell group quantity y in either of the following two manners:
Manner 1: Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by y.

The first quantity may be understood as a maximum quantity of cyclic shift values included in a cyclic shift value group, and the first quantity may be represented by $\left⌈q/y\right⌉$. Rounding a candidate cyclic shift value m divided by the first quantity $\left⌈q/y\right⌉$ may be represented by $m / \left⌈q/y\right⌉$, and $m / \left⌈q/y\right⌉$ may also be replaced with $\left⌊m/\left⌈q/y\right⌉\right⌋$ or $\left⌈m/\left⌈q/y\right⌉\right⌉$. The operator "/" represents a division operation, the operator "┌ ┐" represents rounding up, and the operator "└ ┘" represents rounding down.

Optionally, an integer ( $\left⌊m/\left⌈q/y\right⌉\right⌋$) obtained by rounding down each candidate cyclic shift value m divided by the first quantity $\left⌈q/y\right⌉$ is calculated, and candidate cyclic shift values having a same integer ( $\left⌊m/\left⌈q/y\right⌉\right⌋$) are grouped into a same cyclic shift value group. For example, a candidate cyclic shift value having an integer ( $\left⌊m/\left⌈q/y\right⌉\right⌋$) of 0 belongs to a first group (or referred to as a first cyclic shift value group), a candidate cyclic shift value having an integer ( $\left⌊m/\left⌈q/y\right⌉\right⌋$) of 1 belongs to a second group (or referred to as a second cyclic shift value group), and by analogy, a candidate cyclic shift value having an integer ( $\left⌊m/\left⌈q/y\right⌉\right⌋$) of y-1 belongs to a y^{th} group (or referred to as a y^{th} cyclic shift value group). In this way, a specific cyclic shift value group to which each candidate cyclic shift value m belongs, that is, specific candidate cyclic shift values m included in each cyclic shift value group, may be determined based on the integer ( $\left⌊m/\left⌈q/y\right⌉\right⌋$) obtained by rounding down each candidate cyclic shift value m divided by the first quantity $\left⌈q/y\right⌉$.

For example, assuming that q is 15 and y is 3, the first quantity is 5, and the 15 candidate cyclic shift values are sequentially grouped in ascending order to obtain three cyclic shift value groups, where a first cyclic shift value group is {0, 1, 2, 3, 4}, a second cyclic shift value group is {5, 6, 7, 8, 9}, and a third cyclic shift value group is {10, 11, 12, 13, 14}. In this example, each cyclic shift value group includes a same quantity of candidate cyclic shift values.

For another example, assuming that q is 15 and y is 4, the first quantity is 4, and the 15 candidate cyclic shift values are sequentially grouped in ascending order to obtain four cyclic shift value groups, where a first cyclic shift value group is {0, 1, 2, 3}, a second cyclic shift value group is {4, 5, 6, 7}, a third cyclic shift value group is {8, 9, 10, 11}, and a fourth cyclic shift value group is {12, 13, 14}. In this example, different cyclic shift value groups may include different quantities of candidate cyclic shift values.

Manner 2: Candidate cyclic shift values, in the q candidate cyclic shift values, having a same remainder obtained by the candidate cyclic shift values modulo y form a cyclic shift value group.

Specifically, a remainder (m%y) obtained by each candidate cyclic shift value m modulo y is calculated, and candidate cyclic shift values having a same remainder (m%y) are grouped into a same cyclic shift value group. For example, a candidate cyclic shift value having a remainder (m%y) of 0 belongs to a first group (or referred to as a first cyclic shift value group), a candidate cyclic shift value having a remainder (m%y) of 1 belongs to a second group (or referred to as a second cyclic shift value group), and by analogy, a candidate cyclic shift value having a remainder (m%y) of y-1 belongs to a y^{th} group (or referred to as a y^{th} cyclic shift value group). In this way, a specific cyclic shift value group to which each candidate cyclic shift value m belongs, that is, specific candidate cyclic shift values m included in each cyclic shift value group, may be determined based on the remainder (m%y) obtained by each candidate cyclic shift value m modulo y.

For example, assuming that q is 15 and y is 3, values are sequentially obtained in the 15 candidate cyclic shift values at an interval of 3 to form one group, to obtain three cyclic shift value groups, where a first cyclic shift value group is {0, 3, 6, 9, 12}, a second cyclic shift value group is {1, 4, 7, 10, 13}, and a third cyclic shift value group is {2, 5, 8, 11, 14}. In this example, each cyclic shift value group includes a same quantity of candidate cyclic shift values.

For another example, assuming that q is 15 and y is 4, values are sequentially obtained in the 15 candidate cyclic shift values at an interval of 4 to form one group, to obtain four cyclic shift value groups, where a first cyclic shift value group is {0, 4, 8, 12}, a second cyclic shift value group is {1, 5, 9, 13}, a third cyclic shift value group is {2, 6, 10, 14}, and a fourth cyclic shift value group is {3, 7, 11}. In this example, different cyclic shift value groups may include different quantities of candidate cyclic shift values.

It may be understood that the foregoing two manners are merely examples rather than limitations, and actually, there may be other possibilities.

In the foregoing solution, the first cell group to which the first cell belongs and a first cyclic shift value group corresponding to the first cell group may be determined, so that it can be determined that the cyclic shift value corresponding to the M sequence belongs to the first cyclic shift value group. Further, a specific candidate cyclic shift value in the first cyclic shift value group, which is the cyclic shift value corresponding to the M sequence, needs to be determined.

In a possible implementation, a specific candidate cyclic shift value in the first cyclic shift value group, which is the cyclic shift value corresponding to the M sequence, may be stipulated in the protocol, or may be indicated by the network device (for example, configured by using RRC signaling).

In another possible implementation, the specific candidate cyclic shift value in the first cyclic shift value group, which is the cyclic shift value corresponding to the M sequence, is determined based on a remainder obtained by the terminal device index i modulo a second quantity, where the second quantity is a quantity (denoted as r) of candidate cyclic shift values included in the first cyclic shift value group.

Optionally, the remainder (i%r) obtained by the terminal device index i modulo the second quantity r is calculated, and a specific candidate cyclic shift value in the first cyclic shift value group, which is used as the cyclic shift value corresponding to the M sequence, is determined based on the remainder (i%r). For example, when the remainder (i%r) is 0, a first candidate cyclic shift value in the first cyclic shift value group is used; when the remainder (i%r) is 1, a second candidate cyclic shift value in the first cyclic shift value group is used; and by analogy, when the remainder (i%r) is r-1, an r^{th} candidate cyclic shift value in the first cyclic shift value group is used.

The following provides two specific examples of determining the cyclic shift value corresponding to the M sequence.

Example 1: A cyclic shift value corresponding to an M sequence used by a terminal device (whose index is i) in a first cell (whose index is j) is $\left(j%y\right) * \left⌊q/y\right⌋ + i % \left⌊q/y\right⌋$, where y is a cell group quantity, and q is the length of the M sequence. By using y=3 as an example, an implementation effect of Example 1 is shown in FIG. 5.

As shown in FIG. 5, a candidate cyclic shift value set is {0, 1, ..., q/3-1, q/3, q/3+1, ..., 2q/3-1, 2q/3, 2q/3+1, ..., q-1}, and is grouped into three groups, where a first cyclic shift value group is {0, 1, ..., q/3-1}, a second cyclic shift value group is {q/3, q/3+1, ..., 2q/3-1}, and a third cyclic shift value group is {2q/3, 2q/3+1, ..., q-1}. Correspondingly, cells are also grouped into three groups. An index j about a first cell group satisfies: j%y=0 (for example, j=0, 3, 6, ...), an index j about a second cell group satisfies: j%y=1 (for example, j=1, 4, 7, ...), and an index j about a third cell group satisfies: j%y=2 (for example, j=2, 5, 8, ...). The first cell group corresponds to the first candidate cyclic shift value group, the second cell group corresponds the second candidate cyclic shift value group, and the third cell group corresponds to the third candidate cyclic shift value group.

If the first cell belongs to the first cell group, the cyclic shift value m corresponding to the M sequence used by the terminal device (whose index is i) in the first cell is determined from the first candidate cyclic shift value group. For example, when $i % \left⌊q/y\right⌋ = 0$, m is a first candidate cyclic shift value in the first candidate cyclic shift value group; when $i % \left⌊q/y\right⌋ = 1$, m is a second candidate cyclic shift value in the first candidate cyclic shift value group; and so forth.

If the first cell belongs to the second cell group, the cyclic shift value m corresponding to the M sequence used by the terminal device (whose index is i) in the first cell is determined from the second candidate cyclic shift value group. For example, when $i % \left⌊q/y\right⌋ = 0$, m is a first candidate cyclic shift value in the second candidate cyclic shift value group; when $i % \left⌊q/y\right⌋ = 1$, m is a second candidate cyclic shift value in the second candidate cyclic shift value group; and so forth.

If the first cell belongs to the third cell group, the cyclic shift value m corresponding to the M sequence used by the terminal device (whose index is i) in the first cell is determined from the third candidate cyclic shift value group. For example, when $i % \left⌊q/y\right⌋ = 0$, m is a first candidate cyclic shift value in the third candidate cyclic shift value group; when $i % \left⌊q/y\right⌋ = 1$, m is a second candidate cyclic shift value in the third candidate cyclic shift value group; and so forth.

Example 2: A cyclic shift value corresponding to an M sequence used by a terminal device (whose index is i) in a first cell (whose index is j) is $\left(j%y\right) + \left(i%\left⌊q/y\right⌋\right) * y$, where y is a cell group quantity, and q is the length of the M sequence. By using y=3 as an example, an implementation effect of Example 2 is shown in FIG. 6.

As shown in FIG. 6, a candidate cyclic shift value set is {0, 1, 2, 3, 4, 5, ..., q-3, q-2, q-1}, and is grouped into three groups, where a first candidate cyclic shift value group is {0, 3, 6, ..., 3*(q/3-1)}, a second candidate cyclic shift value group is {1, 4, 7, ..., 3*(q/3-1)+1}, and a third candidate cyclic shift value group is {2, 5, 8, ..., 3*(q/3-1)+2}. Correspondingly, cells are also grouped into three groups. An index j about a first cell group satisfies: j%y=0 (for example, j=0, 3, 6, ...), an index j about a second cell group satisfies: j%y=1 (for example, j=1, 4, 7, ...), and an index j about a third cell group satisfies: j%y=2 (for example, j=2, 5, 8, ...). The first cell group corresponds to the first candidate cyclic shift value group, the second cell group corresponds the second candidate cyclic shift value group, and the third cell group corresponds to the third candidate cyclic shift value group.

If the first cell belongs to the first cell group, the cyclic shift value m corresponding to the M sequence used by the terminal device (whose index is i) in the first cell is determined from the first candidate cyclic shift value group. For example, when $i % \left⌊q/y\right⌋ = 0$, m is a first candidate cyclic shift value in the first candidate cyclic shift value group; when $i % \left⌊q/y\right⌋ = 1$, m is a second candidate cyclic shift value in the first candidate cyclic shift value group; and so forth.

If the first cell belongs to the second cell group, the cyclic shift value m corresponding to the M sequence used by the terminal device (whose index is i) in the first cell is determined from the second candidate cyclic shift value group. For example, when $i % \left⌊q/y\right⌋ = 0$, m is a first candidate cyclic shift value in the second candidate cyclic shift value group; when $i % \left⌊q/y\right⌋ = 1$, m is a second candidate cyclic shift value in the second candidate cyclic shift value group; and so forth.

If the first cell belongs to the third cell group, the cyclic shift value m corresponding to the M sequence used by the terminal device (whose index is i) in the first cell is determined from the third candidate cyclic shift value group. For example, when $i % \left⌊q/y\right⌋ = 0$, m is a first candidate cyclic shift value in the third candidate cyclic shift value group; when $i % \left⌊q/y\right⌋ = 1$, m is a second candidate cyclic shift value in the third candidate cyclic shift value group; and so forth.

It may be understood that the foregoing two manners are merely examples rather than limitations, and actually, there may be other possibilities.

In the foregoing solution, cells are grouped, candidate cyclic shift values are also grouped, a cyclic shift value group corresponds to a cell group, a specific cyclic shift value group used by a terminal device is determined based on a cell index, and a specific cyclic shift value used by the terminal device in the cyclic shift value group is determined based on a terminal device index. In this way, terminal devices in different cell groups can use different cyclic shift values, to help ensure that the terminal devices in different cell groups correspond to different M sequences, and reduce the misjudgment probability.

In another possible design, the first signal is a Gold sequence.

### 1. Definition of the Gold sequence

The Gold sequence is a 0/1 sequence. In other words, the Gold sequence includes a plurality of elements, and each element has two values: 0 and 1. The Gold sequence is generated by using two M sequences of a same length, for example, may be obtained by performing modulo-2 summation on the two M sequences of the same length. For a definition and a characteristic of the M sequence, refer to the foregoing related descriptions. Details are not described herein again. For ease of description, in this embodiment of this application, the two M sequences for generating the Gold sequence are referred to as a first M sequence and a second M sequence.

The first M sequence and the second M sequence may be two independent M sequences, and may use independent initial sequences, independent iterative formulas, independent base sequences, and/or independent cyclic shift values. The cyclic shift values used by the first M sequence and the second M sequence are respectively represented as m1 and m2.

### 2. Characteristic of the Gold sequence

A Gold sequence whose length is 2^{a}-1 is generated by using two M sequences whose lengths are 2^{a}-1, and each M sequence has 2^{a}-1 different sequences (obtained by using 2^{a}-1 different cyclic shifts). Therefore, (2^{a}-1)² different Gold sequences may be generated.

The Gold sequence has a good autocorrelation. To be specific, a correlation between two same Gold sequences is higher, and a correlation between two Gold sequences generated based on different cyclic shift values (m1 and/or m2) for a same base sequence is lower.

The good autocorrelation characteristic of the Gold sequence may be for determining whether the network device sends the first signal corresponding to the terminal device, in other words, the characteristic may be used by the terminal device to determine whether the received signal is the first signal corresponding to the terminal device. Specifically, different Gold sequences may be allocated to different terminal devices (in other words, different cyclic shift values m1 and/or m2 are allocated to different terminal devices) as first signals corresponding to the terminal devices. A terminal device calculates a correlation between a first signal corresponding to the terminal device and a signal received on a time-frequency resource corresponding to the first signal, and determines, based on a correlation calculation result, whether the network device sends the first signal corresponding to the terminal device.

### 3. Allocation of the Gold sequence

The following describes how to allocate different first signals (in this example, the first signal is a Gold sequence) to different terminal devices. A Gold sequence used by the terminal device in a first cell is used as an example to describe how to determine initial sequences, iterative formulas, and cyclic shift values that correspond to two M sequences (that is, a first M sequence and a second M sequence) for generating the Gold sequence.

### (1) Initial sequence

An initial sequence corresponding to the first M sequence and/or the second M sequence is predefined or preconfigured, or is determined based on an index of the first cell and a candidate initial sequence set.

For example, both an initial sequence corresponding to the first M sequence and an initial sequence corresponding to the second M sequence may be fixed values stipulated in a protocol.

For another example, the initial sequence corresponding to the first M sequence and the initial sequence corresponding to the second M sequence each may be one of b initial sequences (or referred to as the candidate initial sequence set, where the candidate initial sequence set includes the b initial sequences supported in the protocol) supported in the protocol. Specific initial sequences in the b initial sequences supported in the protocol, which are the initial sequence corresponding to the first M sequence and the initial sequence corresponding to the second M sequence, may be indicated by the network device (for example, configured by using RRC signaling).

For another example, for the initial sequence corresponding to the first M sequence and the initial sequence corresponding to the second M sequence, one initial sequence is a fixed value stipulated in the protocol, and the other initial sequence is one of the b initial sequences supported in the protocol. A specific initial sequence in the b initial sequences supported in the protocol, which is the other initial sequence, may be indicated by the network device (for example, configured by using RRC signaling), or may be determined in the b initial sequences based on a first cell index j.

### (2) Iterative formula

An iterative formula corresponding to the first M sequence and/or the second M sequence is predefined or preconfigured, or is determined based on the index of the first cell and a candidate iterative formula set.

For example, both an iterative formula corresponding to the first M sequence and an iterative formula corresponding to the second M sequence may be fixed values stipulated in the protocol.

For another example, the iterative formula corresponding to the first M sequence and the iterative formula corresponding to the second M sequence each may be one of c iterative formulas (or referred to as the candidate iterative formula set, where the candidate iterative formula set includes the c iterative formulas supported in the protocol) supported in the protocol. Specific iterative formulas in the c iterative formulas supported in the protocol, which are the iterative formula corresponding to the first M sequence and the iterative formula corresponding to the second M sequence may be indicated by the network device (for example, configured by using RRC signaling).

For another example, for the iterative formula corresponding to the first M sequence and the iterative formula corresponding to the second M sequence, one iterative formula is a fixed value stipulated in the protocol, and the other iterative formula is one of the c iterative formulas supported in the protocol. A specific iterative formula in the c iterative formulas supported in the protocol, which is the other iterative formula, may be indicated by the network device (for example, configured by using RRC signaling), or may be determined in the c iterative formulas based on the first cell index j.

### (3) Cyclic shift value

In a possible implementation, a cyclic shift value corresponding to the first M sequence and/or the second M sequence is predefined or preconfigured.

For example, both a cyclic shift value m1 corresponding to the first M sequence and a cyclic shift value m2 corresponding to the second M sequence may be fixed values stipulated in the protocol.

For another example, the cyclic shift value m1 corresponding to the first M sequence and the cyclic shift value m2 corresponding to the second M sequence each may be one of q candidate cyclic shift values, where q represents a length of the first M sequence (that is, a length of the first M sequence or a length of the Gold sequence). Specific cyclic shift values in the q candidate cyclic shift values, which are m1 and m2, may be indicated by the network device (for example, configured by using RRC signaling).

For another example, for the cyclic shift value m1 corresponding to the first M sequence and the cyclic shift value m2 corresponding to the second M sequence, one cyclic shift value is a fixed value stipulated in the protocol, and the other cyclic shift value is one of the q candidate cyclic shift values. A specific cyclic shift value in the q candidate cyclic shift values, which is the other cyclic shift value, may be indicated by the network device (for example, configured by using RRC signaling).

In another possible implementation, the cyclic shift value m1 and/or the cyclic shift value m2 is determined based on the terminal device index i.

Terminal devices may be grouped, and terminal devices in different terminal device groups use different cyclic shift values m1. For example, the terminal devices may be grouped into z groups, where z is a positive integer, and represents a terminal device group quantity. The terminal device group quantity may be predefined or preconfigured, for example, may be stipulated in the protocol, or may be indicated by the network device (for example, configured by using RRC signaling).

A terminal device group to which the terminal device (whose index is i) belongs is denoted as a first terminal device group. For example, the first terminal device group may be determined in the following manners:
Manner 1: The first terminal device group is predefined or preconfigured.

Terminal device grouping information (for example, a specific terminal device group to which each terminal device belongs) may be stipulated in the protocol, or may be indicated by the network device (for example, configured by using RRC signaling). In this way, a specific terminal device group to which the terminal device (whose index is i) belongs, that is, the first terminal device group, may be determined based on the terminal device grouping information stipulated in the protocol or configured by the network device.

Manner 2: The first terminal device group is determined based on the terminal device index i and the terminal device group quantity z.

Terminal device grouping information (for example, a specific terminal device group to which each terminal device belongs) may be determined based on the terminal device index i and the terminal device group quantity z. Optionally, a remainder obtained by the index of each terminal device modulo the terminal device group quantity z is calculated, and terminal devices having a same remainder are grouped into a same terminal device group. For example, a terminal device having a remainder of 0 belongs to a first group (or referred to as a first terminal device group), a terminal device having a remainder of 1 belongs to a second group (or referred to as a second terminal device group), and by analogy, a cell having a remainder of z-1 belongs to a z^{th} group (or referred to as a z^{th} terminal device group). In this way, a specific terminal device group to which the terminal device (whose index is i) belongs, that is, the first terminal device group, may be determined based on a remainder (i%z) obtained by the terminal device index i modulo the terminal device group quantity z.

After the terminal devices are grouped, each terminal device group may be numbered. For example, a number of the first terminal device group is 0, a number of the second terminal device group is 1, and by analogy, a number of the z^{th} terminal device group is z-1. A value of m1 corresponding to a terminal device group whose number is s may be s, s*q/z, $s * \left⌊q/z\right⌋$, or $s * \left⌈q/z\right⌉$.

The cyclic shift value m1 used by the terminal device is determined based on the first terminal device group, and may be specifically determined based on a number of the first terminal device group.

In an example, the cyclic shift value m1 used by the terminal device may be a number s of the first terminal device group. For example, if the number s of the first terminal device group is 0, the cyclic shift value m1 used by the terminal device is 0; if the number s of the first terminal device group is 1, the cyclic shift value m1 used by the terminal device is 1; and so forth.

In another example, the cyclic shift value m1 used by the terminal device may alternatively be s*q/z, $s * \left⌊q/z\right⌋$, or $s * \left⌈q/z\right⌉$.

Different terminal devices in a same terminal device group use different cyclic shift values m2. The cyclic shift value m2 used by the terminal device is determined based on the index of the terminal device, and may be specifically determined based on an integer obtained by rounding the terminal device index i divided by the terminal device group quantity z.

In an example, the cyclic shift value m2 used by the terminal device may be an integer (i/z) obtained by rounding the terminal device index i divided by the terminal device group quantity z. For example, if i/z=0, the cyclic shift value m2 used by the terminal device is 0; if i/z=1, the cyclic shift value m2 used by the terminal device is 1; and so forth.

In another example, the cyclic shift value m2 used by the terminal device may alternatively be $\left⌊i/z\right⌋$ or $\left⌈i/z\right⌉$.

It should be understood that m1 and m2 in the foregoing method may be interchanged, that is, m2 may be determined by using the foregoing method for determining m1, and m1 may be determined by using the foregoing method for determining m2.

In the foregoing solution, terminal devices are grouped, a cyclic shift value m1 corresponding to a first M sequence is determined based on a terminal device group to which a terminal device belongs, and a cyclic shift value m2 corresponding to a second M sequence is determined based on a terminal device index. In this way, terminal devices in different terminal device groups can use different cyclic shift values m1, and different terminal devices in a same terminal device group can use different cyclic shift values m2, to help ensure that different terminal devices correspond to different Gold sequences, and reduce the misjudgment probability.

In still another possible implementation, the cyclic shift value m1 and/or the cyclic shift value m2 is determined based on the first cell index j and the terminal device index i.

Cells may be grouped, and terminal devices in different cell groups use different cyclic shift values m1. For example, all cells may be grouped into y groups, where y is a positive integer, and represents a cell group quantity. The cell group quantity may be predefined or preconfigured, for example, may be stipulated in the protocol, or may be indicated by the network device (for example, configured by using RRC signaling).

A cell group to which the first cell belongs is denoted as a first cell group. For example, the first cell group may be determined in the following manners:
Manner 1: The first cell group is predefined or preconfigured.

Cell grouping information (for example, a specific cell group to which each cell belongs) may be stipulated in the protocol, or may be indicated by the network device (for example, configured by using RRC signaling). In this way, a specific cell group to which the first cell belongs, that is, the first cell group, may be determined based on the cell grouping information stipulated in the protocol or configured by the network device.

Manner 2: The first cell group is determined based on the cell index j and the cell group quantity y.

Cell grouping information (for example, a specific cell group to which each cell belongs) may be determined based on an index of each cell and the cell group quantity y. Optionally, a remainder obtained by the index of each cell modulo the cell group quantity y is calculated, and cells having a same remainder are grouped into a same cell group. For example, a cell having a remainder of 0 belongs to a first group (or referred to as a first cell group), a cell having a remainder of 1 belongs to a second group (or referred to as a second cell group), and by analogy, a cell having a remainder of y-1 belongs to a y^{th} group (or referred to as a y^{th} cell group). In this way, a specific cell group to which the first cell belongs, that is, the first cell group, may be determined based on a remainder (j%y) obtained by the cell index j modulo the cell group quantity y.

After the cells are grouped, each cell group may be numbered. For example, a number of the first cell group is 0, a number of the second cell group is 1, and by analogy, a number of the y^{th} terminal device group is y-1. A value of m1 corresponding to a cell group whose number is t may be t, t*q/y, $t * \left⌊q/y\right⌋$, or $t * \left⌈q/y\right⌉$.

The cyclic shift value m1 used by the terminal device is determined based on the first cell group, and may be specifically determined based on a number of the first cell group.

In an example, the cyclic shift value m1 used by the terminal device may be a number t of the first cell group. For example, if the number t of the first cell group is 0, the cyclic shift value m1 used by the terminal device is 0; if the number s of the first cell group is 1, the cyclic shift value m1 used by the terminal device is 1; and so forth.

In another example, the cyclic shift value m1 used by the terminal device may alternatively be t*q/y, $t * \left⌊q/y\right⌋$, or $t * \left⌈q/y\right⌉$.

The cyclic shift value m2 used by the terminal device is determined based on the index of the terminal device, and may be specifically determined based on a remainder (i%q) obtained by the terminal device index i modulo the length q of the second M sequence.

For example, the cyclic shift value m2 may be determined based on the terminal device index i in either of the following two manners:
Manner 1: m2=i%q, or m2=i, where q is the length of the second M sequence. Because of a periodicity of an M sequence, cyclic shifts m2=i%q and m2=i may be considered as being equivalent.
Manner 2: m2=i*p%q, or m2=i*p, where p is a positive integer, and q is the length of the second M sequence. A value of P may be for controlling a cyclic shift interval between two adjacent second M sequences. Because of the periodicity of the M sequence, cyclic shifts m2=i*p%q and m2=i*p may be considered as being equivalent.

It may be understood that the foregoing two manners are merely examples rather than limitations, and actually, there may be other possibilities.

It should be understood that m1 and m2 in the foregoing method may be interchanged, that is, m2 may be determined by using the foregoing method for determining m1, and m1 may be determined by using the foregoing method for determining m2.

In the foregoing solution, cells are grouped, a cyclic shift value m1 corresponding to a first M sequence is determined based on a cell index, and a cyclic shift value m2 corresponding to a second M sequence is determined based on a terminal device index. In this way, terminal devices in different cell groups can use different cyclic shift values m1, and different terminal devices in a same cell group can use different cyclic shift values m2, to help ensure that different terminal devices in different cell groups correspond to different Gold sequences, and reduce the misjudgment probability.

In another possible design, the first signal may be another sequence other than the M sequence and the Gold sequence, for example, a Zadoff-Chu sequence (ZC sequence).

The foregoing describes the method provided in embodiments of this application, and the following describes an apparatus provided in embodiments of this application.

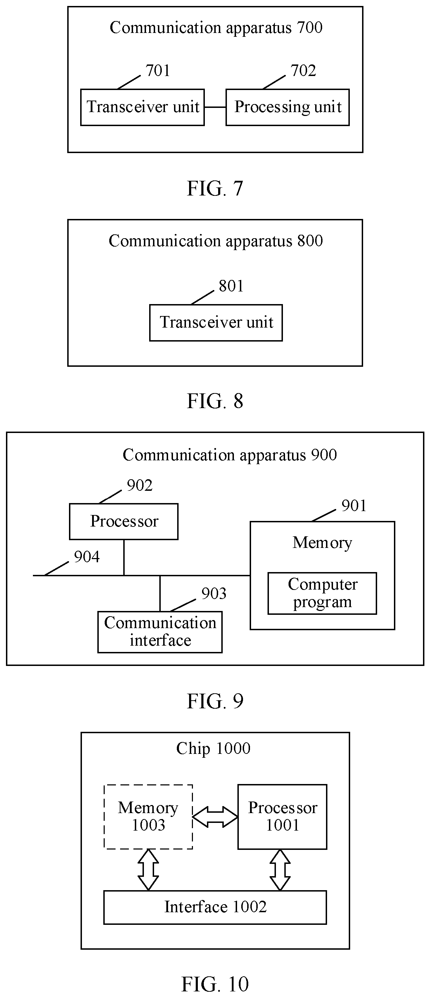

FIG. 7 is a diagram of a structure of a communication apparatus according to an embodiment of this application.

As shown in FIG. 7, the communication apparatus 700 may include a transceiver unit 701 and a processing unit 702. The transceiver unit 701 and the processing unit 702 may be software, hardware, or a combination of software and hardware.

The transceiver unit 701 may implement a sending function and/or a receiving function, and the transceiver unit 701 may also be described as a communication unit. Alternatively, the transceiver unit 701 may be a unit integrating an obtaining unit and a sending unit. The obtaining unit is configured to implement a receiving function, and the sending unit is configured to implement a sending function. Optionally, the transceiver unit 701 may be configured to receive information sent by another apparatus, and may be further configured to send information to another apparatus.

In a possible design, the communication apparatus 700 may correspond to the terminal device in the foregoing method embodiment. For example, the communication apparatus 700 may be the terminal device in the method embodiment shown in FIG. 4, or may be a chip in the terminal device. The communication apparatus 700 may include units configured to perform the operations performed by the terminal device in the foregoing method embodiment. In addition, the units in the communication apparatus 700 are separately configured to perform the operations performed by the terminal device in the foregoing method embodiment. The units are described as follows:

The transceiver unit 701 is configured to receive configuration information, where the configuration information includes a physical downlink control channel PDCCH resource, the PDCCH resource is associated with a first signal, and the first signal is an M sequence or a Gold sequence.

The processing unit 702 is configured to determine, based on whether the first signal associated with the PDCCH resource is received, whether to receive a PDCCH corresponding to the PDCCH resource.

In a possible implementation, when determining, based on whether the first signal associated with the PDCCH resource is received, whether to receive the PDCCH corresponding to the PDCCH resource, the processing unit 702 is specifically configured to:
if the first signal associated with the PDCCH resource is received, determine to receive the PDCCH corresponding to the PDCCH resource; or
if the first signal associated with the PDCCH resource is not received, determine not to receive the PDCCH corresponding to the PDCCH resource.

In a possible implementation, that the first signal associated with the PDCCH resource is received includes: A correlation between the first signal and a signal received on a time-frequency resource corresponding to the first signal is greater than or equal to a threshold.

That the first signal associated with the PDCCH resource is not received includes: The correlation between the first signal and the signal received on the time-frequency resource corresponding to the first signal is less than the threshold.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of a terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:
The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:
The cyclic shift value corresponding to the M sequence is determined based on a remainder obtained by the index of the terminal device modulo a second quantity, where the second quantity is a quantity of candidate cyclic shift values included in the first cyclic shift value group.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of a terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

In a possible design, when the communication apparatus 700 is the terminal device or a communication module in the terminal device, a function of the transceiver unit 701 may be implemented by a transceiver circuit, and a function of the processing unit 702 may be implemented by one or more processors. Specifically, the processor may include a Modem chip, or a SoC chip or a SiP chip including a Modem core.

In a possible design, when the communication apparatus 700 is a circuit or a chip responsible for a communication function in the terminal device, for example, a Modem chip, a system-on-a-chip SoC chip or a SiP chip including a Modem core, a function of the transceiver unit 701 may be implemented by an interface circuit or a data transceiver circuit on the foregoing chip; and a function of the processing unit 702 may be implemented by a circuit system that includes one or more processors or processor cores on the foregoing chip.

FIG. 8 is a diagram of a structure of another communication apparatus according to an embodiment of this application.

As shown in FIG. 8, the communication apparatus 800 may include a transceiver unit 801. The transceiver unit 801 may be software, hardware, or a combination of software and hardware.

The transceiver unit 801 may implement a sending function and/or a receiving function, and the transceiver unit 801 may also be described as a communication unit. Alternatively, the transceiver unit 801 may be a unit integrating an obtaining unit and a sending unit. The obtaining unit is configured to implement a receiving function, and the sending unit is configured to implement a sending function. Optionally, the transceiver unit 801 may be configured to receive information sent by another apparatus, and may be further configured to send information to another apparatus.

In a possible design, the communication apparatus 800 may correspond to the network device in the foregoing method embodiment. For example, the communication apparatus 800 may be the network device in the method embodiment shown in FIG. 4, or may be a chip in the network device. The communication apparatus 800 may include a unit configured to perform the operations performed by the network device in the foregoing method embodiment. In addition, the unit in the communication apparatus 800 is separately configured to perform the operations performed by the network device in the foregoing method embodiment. The unit is described as follows:
The transceiver unit 801 is configured to send configuration information, where the configuration information includes a physical downlink control channel PDCCH resource, the PDCCH resource is associated with a first signal, and the first signal is an M sequence or a Gold sequence.

The transceiver unit 801 is further configured to send a PDCCH corresponding to the PDCCH resource and the first signal associated with the PDCCH resource.

In a possible implementation, the PDCCH resource includes one or more of a control resource set CORESET, a search space, a monitoring occasion, and a PDCCH candidate.

In a possible implementation, the first signal is an M sequence.

An initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of a terminal device, or is determined based on the index of the cell corresponding to the PDCCH resource and the index of the terminal device.

In a possible implementation, that the initial sequence corresponding to the M sequence is determined based on the index of the cell corresponding to the PDCCH resource and the candidate initial sequence set includes:
The initial sequence corresponding to the M sequence is determined based on a remainder obtained by the index of the cell corresponding to the PDCCH resource modulo a quantity of candidate initial sequences included in the candidate initial sequence set.

In a possible implementation, that the iterative formula corresponding to the M sequence is determined based on the index of the cell corresponding to the PDCCH resource and the candidate iterative formula set includes:
The iterative formula corresponding to the M sequence is determined based on a remainder obtained by the index of the cell corresponding to the PDCCH resource modulo a quantity of candidate iterative formulas included in the candidate iterative formula set.

In a possible implementation, that the cyclic shift value corresponding to the M sequence is determined based on the index of the terminal device includes:
The cyclic shift value corresponding to the M sequence is determined based on a remainder obtained by the index of the terminal device modulo a length of the M sequence.

In a possible implementation, that the cyclic shift value corresponding to the M sequence is determined based on the index of the cell corresponding to the PDCCH resource and the index of the terminal device includes:
The cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs.

The first cell group is predefined or preconfigured, or is determined based on the index of the cell corresponding to the PDCCH resource and a cell group quantity.

The cyclic shift value group is obtained by grouping a candidate cyclic shift value set based on the cell group quantity, the candidate cyclic shift value set includes q candidate cyclic shift values, and q is equal to a length of the M sequence.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value group is obtained by grouping the candidate cyclic shift value set based on the cell group quantity includes:
Candidate cyclic shift values, in the q candidate cyclic shift values, having a same integer obtained by rounding the candidate cyclic shift values divided by a first quantity form a cyclic shift value group, where the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

In a possible implementation, that the cyclic shift value corresponding to the M sequence is determined based on the index of the terminal device and the first cyclic shift value group includes:
The cyclic shift value corresponding to the M sequence is determined based on a remainder obtained by the index of the terminal device modulo a second quantity, where the second quantity is a quantity of candidate cyclic shift values included in the first cyclic shift value group.

In a possible implementation, the first signal is a Gold sequence, and the Gold sequence is generated based on a first M sequence and a second M sequence.

An initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of a terminal device, or is determined based on the index of the cell corresponding to the PDCCH resource and the index of the terminal device.

In a possible implementation, that the cyclic shift value corresponding to the first M sequence and/or the second M sequence is determined based on the index of the terminal device includes:
A cyclic shift value corresponding to the first M sequence is determined based on a first terminal device group to which the terminal device belongs, where the first terminal device group is determined based on the index of the terminal device and a terminal device group quantity.

A cyclic shift value corresponding to the second M sequence is determined based on the index of the terminal device.

In a possible implementation, that the first terminal device group is determined based on the index of the terminal device and the terminal device group quantity includes:
The first terminal device group is determined based on a remainder obtained by the index of the terminal device modulo the terminal device group quantity.

In a possible implementation, that the cyclic shift value corresponding to the second M sequence is determined based on the index of the terminal device includes:
The cyclic shift value corresponding to the second M sequence is determined based on an integer obtained by rounding the index of the terminal device divided by the terminal device group quantity.

In a possible implementation, that the cyclic shift value corresponding to the first M sequence and/or the second M sequence is determined based on the index of the cell corresponding to the PDCCH resource and the index of the terminal device includes:
A cyclic shift value corresponding to the first M sequence is determined based on a first cell group to which the cell corresponding to the PDCCH resource belongs, where the first cell group is predefined or preconfigured, or is determined based on the index of the cell corresponding to the PDCCH resource and a cell group quantity.

A cyclic shift value corresponding to the second M sequence is determined based on the index of the terminal device.

In a possible implementation, that the first cell group is determined based on the index of the cell corresponding to the PDCCH resource and the cell group quantity includes:
The first cell group is determined based on a remainder obtained by the index of the cell corresponding to the PDCCH resource modulo the cell group quantity.

In a possible implementation, that the cyclic shift value corresponding to the second M sequence is determined based on the index of the terminal device includes:
The cyclic shift value corresponding to the second M sequence is determined based on a remainder obtained by the index of the terminal device modulo a length of the second M sequence.

According to embodiments of this application, some or all of the units of the apparatuses shown in FIG. 7 and FIG. 8 may be combined into one or more other units, or one (or more) of the units may be further divided into a plurality of smaller functional units. In this way, same operations can be implemented without affecting implementation of technical effect of embodiments of this application. The foregoing units obtained through division based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that, for implementations of the units, refer to corresponding descriptions of the corresponding method embodiment.

FIG. 9 is a diagram of a structure of still another communication apparatus according to an embodiment of this application. The communication apparatus 900 may include a memory 901 and a processor 902. Further, optionally, the communication apparatus 900 may further include a communication interface 903 and a bus 904. The memory 901, the processor 902, and the communication interface 903 implement a communication connection to each other via the bus 904. The communication interface 903 is configured to exchange data with another device.

The memory 901 is configured to provide storage space, and the storage space may store data such as an operating system and a computer program. The memory 901 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 902 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU). The processor 902 may alternatively be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

In a possible design, the communication apparatus 900 may correspond to the terminal device in the foregoing method embodiment. For example, the communication apparatus 900 may be the terminal device in the foregoing method embodiment, or may be a chip in the terminal device. The communication apparatus 900 may include components configured to perform the operations performed by the terminal device in the foregoing method embodiment. In addition, the components in the communication apparatus 900 are separately configured to perform the operations performed by the terminal device in the foregoing method embodiment, and the processor 902 invokes the computer program stored in the memory 901, to perform the method shown in the foregoing method embodiment.

In another possible design, the communication apparatus 900 may correspond to the network device in the foregoing method embodiment. For example, the communication apparatus 900 may be the network device in the foregoing method embodiment, or may be a chip in the network device. The communication apparatus 900 may include components configured to perform the operations performed by the network device in the foregoing method embodiment. In addition, the components in the communication apparatus 900 are separately configured to perform the operations performed by the network device in the foregoing method embodiment, and the processor 902 invokes the computer program stored in the memory 901, to perform the method shown in the foregoing method embodiment.

When the communication apparatus may be a chip or a chip system, refer to a diagram of a structure of a chip in FIG. 10.

As shown in FIG. 10, a chip 1000 includes a processor 1001 and an interface 1002. There may be one or more processors 1001, and there may be a plurality of interfaces 1002. It should be noted that a function corresponding to each of the processor 1001 and the interface 1002 may be implemented by using a hardware design, a software design, or a combination of software and hardware. This is not limited herein.

Optionally, the chip 1000 may further include a memory 1003, and the memory 1003 is configured to store necessary program instructions and data.

In this application, the processor 1001 may be configured to invoke, from the memory 1003, a program for implementing the communication method provided in one or more embodiments of this application on the electronic device, and execute instructions included in the program. The interface 1002 may be configured to output an execution result of the processor 1001. In this application, the interface 1002 may be specifically configured to output messages or information of the processor 1001.

For the communication method provided in one or more embodiments of this application, refer to the foregoing method embodiments. Details are not described herein again.

According to the method provided in embodiments of this application, an embodiment of this application further provides a computer-readable storage medium. The computer-readable storage medium stores a computer program or instructions. When the computer program or the instructions are run on a processor, the method shown in the foregoing method embodiment may be implemented.

According to the method provided in embodiments of this application, an embodiment of this application further provides a computer program product. The computer program product includes a computer program or instructions. When the computer program or the instructions are run on a processor, the method shown in the foregoing method embodiment may be implemented.

According to the method provided in embodiments of this application, an embodiment of this application further provides a communication system. The communication system includes at least one communication apparatus 700, communication apparatus 800, communication apparatus 900, or chip 1000 described above.

According to the method provided in embodiments of this application, an embodiment of this application further provides a communication system. The communication system includes a terminal device and a network device. The terminal device is configured to perform the steps performed by the terminal device in the foregoing method embodiment, and the network device is configured to perform the steps performed by the network device in the foregoing method embodiment.

It should be understood that the memory in embodiments of this application may be a volatile memory or a nonvolatile memory, or may include both a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in this specification aims to include but is not limited to these memories and any memory of another proper type.

All or a part of the foregoing embodiments may be implemented by using software, hardware, firmware, or any combination thereof. When software is used to implement the technical solutions, all or a part of the technical solutions may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part of or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving configuration information, wherein the configuration information comprises a physical downlink control channel PDCCH resource, the PDCCH resource is associated with a first signal, and the first signal is an M sequence or a Gold sequence; and
determining, based on whether the first signal associated with the PDCCH resource is received, whether to receive a PDCCH corresponding to the PDCCH resource.

2. A communication method, comprising:
sending configuration information, wherein the configuration information comprises a physical downlink control channel PDCCH resource, the PDCCH resource is associated with a first signal, and the first signal is an M sequence or a Gold sequence; and
sending a PDCCH corresponding to the PDCCH resource and the first signal associated with the PDCCH resource.

3. The method according to claim 1, wherein the determining, based on whether the first signal associated with the PDCCH resource is received, whether to receive the PDCCH corresponding to the PDCCH resource comprises:
if the first signal associated with the PDCCH resource is received, determining to receive the PDCCH corresponding to the PDCCH resource; or
if the first signal associated with the PDCCH resource is not received, determining not to receive the PDCCH corresponding to the PDCCH resource.

4. The method according to claim 3, wherein that the first signal associated with the PDCCH resource is received comprises:
a correlation between the first signal and a signal received on a time-frequency resource corresponding to the first signal is greater than or equal to a threshold; and
that the first signal associated with the PDCCH resource is not received comprises:
the correlation between the first signal and the signal received on the time-frequency resource corresponding to the first signal is less than the threshold.

5. The method according to any one of claims 1 to 4, wherein the PDCCH resource comprises one or more of a control resource set CORESET, a search space, a monitoring occasion, and a PDCCH candidate.

6. The method according to any one of claims 1 to 5, wherein the first signal is an M sequence, wherein
an initial sequence corresponding to the M sequence is predefined or preconfigured, or is determined based on an index of a cell corresponding to the PDCCH resource and a candidate initial sequence set;
an iterative formula corresponding to the M sequence is predefined or preconfigured, or is determined based on the index of the cell corresponding to the PDCCH resource and a candidate iterative formula set; and/or
a cyclic shift value corresponding to the M sequence is predefined or preconfigured, is determined based on an index of a terminal device, or is determined based on the index of the cell corresponding to the PDCCH resource and the index of the terminal device.

7. The method according to claim 6, wherein that the cyclic shift value corresponding to the M sequence is determined based on the index of the terminal device comprises:
the cyclic shift value corresponding to the M sequence is determined based on a remainder obtained by the index of the terminal device modulo a length of the M sequence.

8. The method according to claim 6, wherein that the cyclic shift value corresponding to the M sequence is determined based on the index of the cell corresponding to the PDCCH resource and the index of the terminal device comprises:
the cyclic shift value corresponding to the M sequence is determined based on the index of the terminal device and a first cyclic shift value group, and the first cyclic shift value group is a cyclic shift value group corresponding to a first cell group to which the cell corresponding to the PDCCH resource belongs, wherein
the first cell group is predefined or preconfigured, or is determined based on the index of the cell corresponding to the PDCCH resource and a cell group quantity; and
the cyclic shift value group is obtained by grouping a candidate cyclic shift value set based on the cell group quantity, the candidate cyclic shift value set comprises q candidate cyclic shift values, and q is equal to a length of the M sequence.

9. The method according to claim 8, wherein that the first cell group is determined based on the index of the cell corresponding to the PDCCH resource and the cell group quantity comprises:
the first cell group is determined based on a remainder obtained by the index of the cell corresponding to the PDCCH resource modulo the cell group quantity.

10. The method according to claim 8 or 9, wherein that the cyclic shift value group is obtained by grouping the candidate cyclic shift value set based on the cell group quantity comprises:
candidate cyclic shift values, in the q candidate cyclic shift values, having a same integer obtained by rounding the candidate cyclic shift values divided by a first quantity form a cyclic shift value group, wherein the first quantity is an integer obtained by rounding up q divided by the cell group quantity; or
candidate cyclic shift values, in the q candidate cyclic shift values, having a same remainder obtained by the candidate cyclic shift values modulo the cell group quantity form a cyclic shift value group.

11. The method according to any one of claims 7 to 10, wherein that the cyclic shift value corresponding to the M sequence is determined based on the index of the terminal device and the first cyclic shift value group comprises:
the cyclic shift value corresponding to the M sequence is determined based on a remainder obtained by the index of the terminal device modulo a second quantity, wherein the second quantity is a quantity of candidate cyclic shift values comprised in the first cyclic shift value group.

12. The method according to any one of claims 1 to 5, wherein the first signal is a Gold sequence, and the Gold sequence is generated based on a first M sequence and a second M sequence, wherein
an initial sequence corresponding to the first M sequence and/or the second M sequence is predefined or preconfigured, or is determined based on an index of a cell corresponding to the PDCCH resource and a candidate initial sequence set;
an iterative formula corresponding to the first M sequence and/or the second M sequence is predefined or preconfigured, or is determined based on the index of the cell corresponding to the PDCCH resource and a candidate iterative formula set; and/or
a cyclic shift value corresponding to the first M sequence and/or the second M sequence is predefined or preconfigured, is determined based on an index of a terminal device, or is determined based on the index of the cell corresponding to the PDCCH resource and the index of the terminal device.

13. The method according to claim 12, wherein that the cyclic shift value corresponding to the first M sequence and/or the second M sequence is determined based on the index of the terminal device comprises:
a cyclic shift value corresponding to the first M sequence is determined based on a first terminal device group to which the terminal device belongs, wherein the first terminal device group is determined based on the index of the terminal device and a terminal device group quantity; and
a cyclic shift value corresponding to the second M sequence is determined based on the index of the terminal device.

14. The method according to claim 13, wherein that the first terminal device group is determined based on the index of the terminal device and the terminal device group quantity comprises:
the first terminal device group is determined based on a remainder obtained by the index of the terminal device modulo the terminal device group quantity.

15. The method according to claim 13 or 14, wherein that the cyclic shift value corresponding to the second M sequence is determined based on the index of the terminal device comprises:
the cyclic shift value corresponding to the second M sequence is determined based on an integer obtained by rounding the index of the terminal device divided by the terminal device group quantity.

16. The method according to claim 12, wherein that the cyclic shift value corresponding to the first M sequence and/or the second M sequence is determined based on the index of the cell corresponding to the PDCCH resource and the index of the terminal device comprises:
a cyclic shift value corresponding to the first M sequence is determined based on a first cell group to which the cell corresponding to the PDCCH resource belongs, wherein the first cell group is predefined or preconfigured, or is determined based on the index of the cell corresponding to the PDCCH resource and a cell group quantity; and
a cyclic shift value corresponding to the second M sequence is determined based on the index of the terminal device.

17. The method according to claim 16, wherein that the first cell group is determined based on the index of the cell corresponding to the PDCCH resource and the cell group quantity comprises:
the first cell group is determined based on a remainder obtained by the index of the cell corresponding to the PDCCH resource modulo the cell group quantity.

18. The method according to claim 16 or 17, wherein that the cyclic shift value corresponding to the second M sequence is determined based on the index of the terminal device comprises:
the cyclic shift value corresponding to the second M sequence is determined based on a remainder obtained by the index of the terminal device modulo a length of the second M sequence.

19. A communication apparatus, comprising a unit configured to perform the method according to any one of claims 1 to 18.

20. A communication apparatus, comprising a processor, wherein the processor is configured to execute a computer program or instructions, and when the processor executes the computer program or the instructions, the method according to any one of claims 1 to 18 is implemented.

21. A computer-readable storage medium, wherein the computer-readable storage medium stores a computer program or instructions, and when the computer program or the instructions are executed, the method according to any one of claims 1 to 18 is implemented.

22. A computer program product, comprising a computer program or instructions, wherein when the computer program or the instructions are executed, the method according to any one of claims 1 to 18 is implemented.
